# EUROPEAN PATENT APPLICATION

(11) **EP 4 808 009 A1**
(43) Date of publication of application: **16.09.2026**
(21) Application number: 24896298.7
(22) Date of filing: 15.11.2024
(51) Int. Cl.: H04B 7/06

(54) **COMMUNICATION METHOD AND SYSTEM, AND RELATED APPARATUS**

(30) Priority: 29.11.2023 CN 202311627134
(71) Applicant: Huawei Technologies Co., Ltd., Shenzhen, Guangdong 518129 (CN)
(72) Inventor: PAN, Chun, Shenzhen, Guangdong 518129 (CN); YANG, Xi, Shenzhen, Guangdong 518129 (CN); LI, Yunbo, Shenzhen, Guangdong 518129 (CN); XU, Yue, Shenzhen, Guangdong 518129 (CN)
(74) Representative: Pfenning, Meinig & Partner mbB
(86) International application number: PCT/CN2024/132418
(87) International publication number: WO 2025/113207

(57) **Abstract**

This application provides a communication method and system, and a related apparatus. In the method, a terminal can perform reverse calculation on an uplink channel based on first downlink CSI, to obtain channel state information of the uplink channel, namely, first uplink CSI. In this application, the uplink channel does not need to be sounded by using a method of exchanging an uplink reference signal between the terminal and a network device. Instead, the uplink channel is sounded by performing reverse calculation on the uplink channel based on a reciprocity calibration result of a radio frequency channel of the terminal, to obtain the first uplink CSI. This can reduce signaling interaction and improve uplink channel sounding efficiency.

## Description

This application claims priority to Chinese Patent Application No. 202311627134.1, filed with the China National Intellectual Property Administration on November 29, 2023 and entitled "COMMUNICATION METHOD AND SYSTEM, AND RELATED APPARATUS", which is incorporated herein by reference in its entirety.

### TECHNICAL FIELD

Embodiments of this application relate to the field of communication technologies, and in particular, to a communication method and system, and a related apparatus.

### BACKGROUND

Network transmission quality is closely related to channel quality, and before information is transmitted on a channel, channel sounding may be performed, to determine channel quality. For the channel between a network device and a terminal, the network device may send downlink information to the terminal through the channel, and the terminal may send uplink information to the network device through the channel. The channel carrying the downlink information may be used as a downlink channel, and the channel carrying the uplink information may be used as an uplink channel.

Currently, the network device may send a reference signal to the terminal, and the terminal sounds the downlink channel based on the reference signal, to obtain channel state information (channel state information, CSI) of the downlink channel, and feeds back the channel state information of the downlink channel to the network device. Similarly, the terminal may send a reference signal to the network device, and the network device sounds the uplink channel based on the reference signal, to obtain uplink CSI. Currently, high signaling overheads are caused for determining the downlink CSI and the uplink CSI by the network device.

### SUMMARY

Embodiments of this application provide a communication method and system, and a related apparatus. A terminal sounds a downlink channel to obtain downlink CSI, and performs radio frequency channel reciprocity compensation on the downlink CSI, to obtain uplink CSI; and the terminal can report the downlink CSI and the uplink CSI to a network device. This can reduce signaling overheads.

According to a first aspect, a communication method is provided. The method may be performed by a communication apparatus. The communication apparatus may be a terminal, or may be a component (for example, a chip, a chip system, or a processor) configured in a terminal, or may be a logic module or software that can implement all or some functions of the communication apparatus. For ease of understanding and description below, the method is described by using a terminal as an example.

For example, the method includes: The terminal receives a first reference signal, and sends first uplink channel state information, where the first uplink channel state information is obtained by performing radio frequency channel reciprocity compensation on first downlink channel state information, and the first downlink channel state information is obtained based on the first reference signal.

The first reference signal is a downlink reference signal, and the downlink reference signal is from a network device. For example, the first reference signal may be sent by the network device to the terminal, or the first reference signal is broadcast by the network device. The first downlink reference signal is used to sound a downlink channel between the network device and the terminal. In this application, after receiving the first reference signal, the terminal may sound the downlink channel, to obtain downlink channel state information (channel state information, CSI). In this application, for ease of differentiation and description, the downlink CSI obtained by the terminal based on the first reference signal may be used as the first downlink CSI. In other words, the first downlink CSI is obtained based on the first reference signal.

After obtaining the first downlink CSI, the terminal may perform radio frequency channel reciprocity compensation on the first downlink CSI, to obtain the first uplink CSI. A radio frequency channel is a radio frequency channel of the terminal, and the terminal may include at least two antennas. Each antenna may correspond to one radio frequency channel. A radio frequency channel corresponding to each antenna may be understood as a radio frequency channel connected to an antenna. For example, the antenna receives the first reference signal, and transmits the first reference signal to the radio frequency channel for processing. The radio frequency channel may send a signal through the antenna. In other words, an antenna corresponds to a radio frequency channel.

In this application, that the terminal performs radio frequency channel reciprocity compensation on the first downlink CSI may be understood as that the terminal performs compensation processing on the first downlink CSI based on a reciprocity calibration result of the radio frequency channel of the terminal, or the terminal performs reverse calculation (or reciprocity compensation or reverse compensation) on the first downlink CSI based on a reciprocity calibration result of the radio frequency channel. In a possible scenario, the first downlink CSI may be represented in a matrix form, and the reciprocity calibration result of the radio frequency channel may also be represented in a matrix form. That the terminal performs radio frequency channel reciprocity compensation on the first downlink CSI may be understood as that the terminal performs calculation on the first downlink CSI and the reciprocity calibration result of the radio frequency channel, or the terminal performs calculation on two matrices.

The reciprocity calibration result of the radio frequency channel may include difference information between radio frequency channels corresponding to the first reference signal. The radio frequency channel corresponding to the first reference signal may be understood as a radio frequency channel that receives the first reference signal in the terminal. For example, the terminal includes an antenna 1 and an antenna 2. Both the antenna 1 and the antenna 2 receive the first reference signal, and the radio frequency channels corresponding to the first reference signal may include a radio frequency channel corresponding to the antenna 1 and a radio frequency channel corresponding to the antenna 2.

In some embodiments, the difference information between the radio frequency channels may include a delay difference and/or a phase difference between the radio frequency channels. It should be understood that the radio frequency channel may include a transmit channel and a receive channel. In a possible scenario, the delay difference and/or the phase difference between the radio frequency channels may include a delay difference and/or a phase difference between transmit channels corresponding to antennas, and a delay difference and/or a phase difference between receive channels corresponding to the antennas of the terminal. It should be understood that the transmit channels corresponding to the antennas may be understood as transmit channels in radio frequency channels corresponding to the antennas. The receive channels corresponding to the antennas may be understood as receive channels in the radio frequency channels corresponding to the antennas.

The delay difference and/or the phase difference between the radio frequency channels may be understood as a delay difference and/or a phase difference between a radio frequency channel corresponding to a reference antenna and a radio frequency channel corresponding to another antenna.

For example, the terminal includes an antenna 1 and an antenna 2. For example, the reference signal is the antenna 1. The delay difference and/or the phase difference between the radio frequency channels may be understood as a delay difference and/or a phase difference between a radio frequency channel corresponding to the antenna 2 and a radio frequency channel corresponding to the antenna 1 The delay difference and/or the phase difference between the transmit channels corresponding to the antennas may include a delay difference and/or a phase difference between a transmit channel corresponding to the antenna 1 and a transmit channel corresponding to the antenna 2. The delay difference and/or the phase difference between the receive channels corresponding to the antennas may include a delay difference and/or a phase difference between a receive channel corresponding to the antenna 1 and a receive channel corresponding to the antenna 2.

For example, the terminal includes an antenna 1, an antenna 2, and an antenna 3. The reference antenna may be the antenna 1, the antenna 2, or the antenna 3. For example, the reference antenna is the antenna 1. The reciprocity calibration result of the radio frequency channel may include a delay difference and/or a phase difference between a radio frequency channel corresponding to the antenna 2 and a radio frequency channel corresponding to the antenna 1, and a delay difference and/or a phase difference between a radio frequency channel corresponding to the antenna 3 and the radio frequency channel corresponding to the antenna 1. Specifically, the reciprocity calibration result of the radio frequency channel may include a delay difference and/or a phase difference between a receive channel corresponding to the antenna 2 and a receive channel corresponding to the antenna 1, a delay difference and/or a phase difference between a receive channel corresponding to the antenna 3 and the receive channel corresponding to the antenna 1, a delay difference and/or a phase difference between a transmit channel corresponding to the antenna 2 and a transmit channel corresponding to the antenna 1, and a delay difference and/or a phase difference between a transmit channel corresponding to the antenna 3 and the transmit channel corresponding to the antenna 1.

In some embodiments, the first uplink CSI is obtained by calculating the first downlink CSI and the difference information between the radio frequency channels, and the difference information between the radio frequency channels may include the delay difference and/or the phase difference between the radio frequency channels. Therefore, it may be considered that there is an association relationship between the first uplink channel state information and the difference information between the radio frequency channels corresponding to the first reference signal, and the difference information includes the delay difference and/or the phase difference.

In embodiments of this application, the terminal performs reciprocity calibration on the radio frequency channel, so that uplink and downlink channels between the network device and the terminal can have reciprocity. In this way, the terminal can perform reverse calculation on the uplink channel based on the first downlink CSI, to obtain channel state information of the uplink channel, namely, the first uplink CSI. In this application, the uplink channel does not need to be sounded by using a method of exchanging an uplink reference signal between the terminal and a network device. Instead, the uplink channel is sounded by performing reverse calculation on the uplink channel based on the reciprocity calibration result of the radio frequency channel of the terminal, to obtain the first uplink CSI. This can reduce signaling interaction and improve uplink channel sounding efficiency.

In addition, when there are a plurality of terminals interacting with the network device, the network device does not need to pre-allocate a resource for sending the uplink reference signal to each terminal, or the terminal does not need to send the uplink reference signal to the network device in a polling-based manner. This can channel air interface resources.

In embodiments of this application, after obtaining the first downlink CSI and the first uplink CSI, the terminal may send the first downlink CSI and the first uplink CSI to the network device. In this way, the network device does not need to sound the uplink channel based on the uplink reference signal from the terminal, and can obtain the first downlink CSI and the first uplink CSI. Therefore, uplink channel sounding efficiency is high. In other words, the terminal includes the first uplink CSI in the first downlink CSI when sending the first downlink CSI to the network device.

In a possible implementation, the first downlink channel state information (CSI) and the first uplink channel state information (CSI) are carried in a same message. For example, currently, in a WLAN system, after sounding the downlink channel based on the first reference signal, the terminal may encapsulate the first downlink CSI into a compressed beamforming report. In embodiments of this application, after obtaining the first downlink CSI and the first uplink CSI, the terminal may encapsulate the first downlink CSI and the first uplink CSI into a compressed beamforming report, and the terminal may send the compressed beamforming report to the network device.

In a possible implementation, the first downlink CSI and the first uplink CSI may be carried in different messages. For example, the terminal may first send the first downlink CSI to the network device, and then send the first uplink CSI to the network device. For example, when obtaining the first downlink CSI through calculation, the terminal may first send the first downlink CSI to the network device, and when the terminal performs reverse calculation on the first downlink CSI to obtain the first uplink CSI, the terminal may send the first uplink CSI to the network device. Alternatively, after the terminal obtains the first downlink CSI and the first uplink CSI, the terminal may first send the first downlink CSI to the network device, and then send the first uplink CSI to the network device. This is not limited in embodiments of this application. In the WLAN system, the terminal may include the first downlink CSI in the compressed beamforming report, and send the compressed beamforming report to the network device. After sending the compressed beamforming report, the terminal may send, to the network device, a message carrying the first uplink CSI.

With reference to the first aspect, in some possible implementations of the first aspect, before sending the first reference signal to the terminal, the network device may further send first information to the terminal, or the network device may broadcast the first information. Correspondingly, the terminal may receive the first information. The first information indicates to report downlink channel state information and uplink channel state information.

It should be understood that in a current communication protocol, the network device may send indication information to the terminal, where the indication information indicates the terminal to report the downlink channel state information. In this example, the terminal may sound a downlink channel, and obtain only the downlink CSI, and report the downlink CSI to the network device, but does not report the downlink CSI and the uplink CSI to the network device.

Alternatively, the network device may send indication information to the terminal, where the indication information indicates the terminal to send an uplink reference signal. In this example, the terminal may send the uplink reference signal to the network device, and the network device sounds an uplink channel, and obtains only the uplink CSI. The terminal does not need to report the uplink CSI.

In embodiments of this application, the network device may send the first information, and correspondingly, the terminal receives the first information. In other words, the network device may indicate the terminal to report the downlink CSI and the uplink CSI. In this way, after obtaining the first downlink CSI based on the first reference signal, the terminal may perform reciprocity compensation on the first downlink CSI based on the reciprocity calibration result of the radio frequency channel corresponding to the terminal, to obtain the first uplink CSI. The terminal may obtain the first downlink CSI and the first uplink CSI. This can reduce signaling interaction and improve uplink channel sounding efficiency.

With reference to the first aspect, in some possible implementations of the first aspect, the terminal may send second information, where the second information indicates that there is a capability of reporting the downlink channel state information and the uplink channel state information. Correspondingly, the network device may receive the second information, and the network device may determine, based on the second information, that the terminal has the capability of reporting the downlink channel state information and the uplink channel state information. When the network device determines that the terminal has the capability of reporting the downlink channel state information and the uplink channel state information, the network device may send the first information to the terminal, to indicate the terminal to report the downlink channel state information and the uplink channel state information.

In a possible scenario, in the WLAN system, an association request may carry the second information. Alternatively, the association request may carry information indicating that the terminal has the capability of reporting the downlink CSI and uplink CSI, and the association request may be considered as the second information. In some embodiments, the terminal may also send the second information to the network device after being associated with the network device.

In a possible scenario, in the LTE system, the terminal may send the second information to the network device in a process of establishing a connection to the network device. For example, according to a current LTE protocol, in some embodiments, the terminal may include the second information in capability information when reporting the capability information of the terminal to the network device. Alternatively, the terminal may send the second information to the network device after establishing a connection to the network device.

The foregoing example describes a method in which the terminal may perform radio frequency channel reciprocity compensation on the first downlink CSI based on the reciprocity calibration result of the radio frequency channel, to obtain the first uplink CSI. The following describes a method in which the terminal obtains the reciprocity calibration result of the radio frequency channel.

First, the terminal supports self-calibration, that is, the terminal may perform reciprocity calibration on the radio frequency channel, to obtain the delay difference and/or the phase difference between the radio frequency channels of the terminal.

The terminal traverses each antenna that receives the first reference signal. The terminal may send a first signal through a transmit channel corresponding to one antenna that receives the first reference signal, and receive the first signal through a transmit channel corresponding to a remaining antenna that receives the first reference signal. After the terminal traverses each antenna that receives the first reference signal, the terminal may determine the delay difference and/or the phase difference between the radio frequency channels of the terminal based on the sent first signal and the received first signal.

For example, the terminal includes an antenna 1 and an antenna 2. Both the antenna 1 and the antenna 2 receive the first reference signal, that is, the first reference signal corresponds to the antenna 1 and the antenna 2, or the first reference signal corresponds to a radio frequency channel corresponding to the antenna 1 and a radio frequency channel corresponding to the antenna 2. In this example, the terminal sends a first signal through a transmit channel corresponding to the antenna 1, and the terminal receives the first signal through a receive channel corresponding to the antenna 2. The terminal sends a second signal through a transmit channel corresponding to the antenna 2, and the terminal receives the second signal through a receive channel corresponding to the antenna 1 The terminal may determine a delay difference and/or a phase difference between the radio frequency channels of the terminal based on the sent first signal, the received first signal, the sent second signal, and the received second signal.

The first signal sent by the transmit channel corresponding to the antenna 1 is received, through space transmission, by the receive channel corresponding to the antenna 2, to complete sounding of the transmit channel corresponding to the antenna 1 and the receive channel corresponding to the antenna 2, and obtain a delay and a phase of the receive channel corresponding to the antenna 2 and a delay and a phase of the transmit channel corresponding to the antenna 1. Similarly, the second signal sent by the transmit channel corresponding to the antenna 2 is received, through space transmission, by the receive channel corresponding to the antenna 1, to complete sounding of the transmit channel corresponding to the antenna 2 and the receive channel corresponding to the antenna 1, and obtain a delay and a phase of the receive channel corresponding to the antenna 1 and a delay and a phase of the transmit channel corresponding to the antenna 2. The terminal may perform difference processing on the delay and the phase of the receive channel corresponding to the antenna 2 and the delay and the phase of the receive channel corresponding to the antenna 1, to obtain a delay difference and/or a phase difference between the receive channel corresponding to the antenna 2 and the receive channel corresponding to the antenna 1, and the terminal may perform difference processing on the delay and the phase of the transmit channel corresponding to the antenna 2 and the delay and the phase of the transmit channel corresponding to the antenna 1, to obtain a delay difference and/or a phase difference between the transmit channel corresponding to the antenna 2 and the transmit channel corresponding to the antenna1.

Second, the terminal does not support self-calibration, that is, the terminal does not have a capability of performing reciprocity calibration on the radio frequency channel. In this example, the terminal may exchange reference signals with the network device, to implement reciprocity calibration on the radio frequency channel by the terminal.

The terminal may actively initiate, to the network device, a request for reciprocity calibration on the radio frequency channel. For example, the terminal may send a second reference signal to the network device. The second reference signal is an uplink reference signal. After receiving the second reference signal, the network device may sound an uplink channel, to obtain second uplink channel state information, and send the second uplink channel state information to the terminal. In other words, the second uplink channel state information is obtained based on the second reference signal.

In addition, the network device may send a third reference signal to the terminal in response to receiving the second reference signal, where the third reference signal is a downlink reference signal. The terminal may sound a downlink channel based on the third reference signal, to obtain second downlink channel state information.

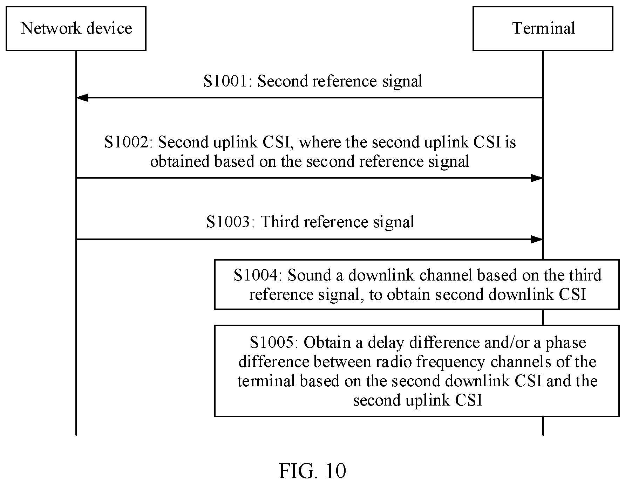

In this way, the terminal can obtain the second uplink channel state information and the second downlink channel state information, and the terminal may determine the delay difference and/or the phase difference based on the second uplink channel state information and the second downlink channel state information. In other words, the terminal performs reciprocity calibration on the radio frequency channel of the terminal based on the second uplink channel state information and the second downlink channel state information, to obtain the delay difference and/or the phase difference. For details, refer to related descriptions in FIG. 10 in the following embodiment.

According to a second aspect, a communication method is provided. The method may be performed by a communication apparatus. The communication apparatus may be a network device, or may be a component (for example, a chip, a chip system, or a processor) configured in a network device, or may be a logic module or software that can implement all or some functions of the communication apparatus.

It should be understood that the method provided in the second aspect corresponds to the first aspect. For descriptions of same or corresponding content, refer to related descriptions in the first aspect. Details are not described again.

For example, a network device may send a first reference signal, and receive first uplink channel state information, where the first uplink channel state information is obtained by performing radio frequency channel reciprocity compensation on first downlink channel state information, and the first downlink channel state information is obtained based on the first reference signal.

In a possible implementation, the method further includes: The network device receives the first downlink channel state information, where the first downlink channel state information and the first uplink channel state information are carried in a same message.

In a possible implementation, before sending the first reference signal, the method further includes: The network device sends first information, where the first information indicates to report downlink channel state information and uplink channel state information.

In a possible implementation, the method further includes: The network device receives second information, where the second information indicates that there is a capability of reporting the downlink channel state information and the uplink channel state information.

In a possible implementation, there is an association relationship between the first uplink channel state information and difference information between radio frequency channels corresponding to the first reference signal, and the difference information includes a delay difference and/or a phase difference.

In a possible implementation, the method further includes: The network device receives a second reference signal, and sends second uplink channel state information, where the second uplink channel state information is obtained based on the second reference signal. The network device may send a third reference signal, where the third reference signal is used to determine second downlink channel state information, and the delay difference and/or the phase difference are/is obtained based on the second uplink channel state information and the second downlink channel state information.

According to a third aspect, this application provides a communication apparatus, including a module or a unit configured to implement the method according to any one of the first aspect or the possible implementations of the first aspect. Each module or unit may implement a corresponding function by executing a computer program.

For example, the communication apparatus in the third aspect is a terminal or a component configured in a terminal, for example, a chip, a chip system, or a processor.

According to a fourth aspect, this application provides a communication apparatus, including a processor. The processor is configured to perform the communication method according to any one of the first aspect or the possible implementations of the first aspect.

Optionally, the apparatus further includes a memory, configured to store instructions and data. The memory is coupled to the processor. When the processor executes the instructions stored in the memory, the methods described in the foregoing aspects may be implemented.

Optionally, the apparatus further includes a communication interface. The communication interface is configured for the apparatus to communicate with another communication apparatus. For example, the communication interface may be a transceiver, a circuit, a bus, a module, a pin, or another type of communication interface.

For example, the communication apparatus provided in the fourth aspect is a chip or a chip system.

According to a fifth aspect, this application provides a communication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor implements the communication method according to any one of the first aspect or the possible implementations of the first aspect through a logic circuit or executing code instructions. For example, the communication interface may be a transceiver, a circuit, a bus, a module, a pin, or another type of communication interface.

Optionally, the apparatus further includes a memory, configured to store instructions and data. The memory is coupled to the processor. When the processor executes the instructions stored in the memory, the method described in the first aspect may be implemented.

According to a sixth aspect, this application provides a communication apparatus, including a processor and a memory. The memory is configured to store instructions and data. When executing the instructions stored in the memory, the processor may implement the communication method according to any one of the first aspect or the possible implementations of the first aspect.

Optionally, the apparatus further includes a communication interface. The communication interface is configured for the apparatus to communicate with another communication apparatus. For example, the communication interface may be a transceiver, a circuit, a bus, a module, a pin, or another type of communication interface.

For example, the communication apparatus in the fifth aspect or the sixth aspect is a terminal.

According to a seventh aspect, this application provides a communication apparatus, including a module or a unit configured to implement the method according to any one of the second aspect or the possible implementations of the second aspect. Each module or unit may implement a corresponding function by executing a computer program.

For example, the communication apparatus in the third aspect is a terminal or a component configured in a terminal, for example, a chip, a chip system, or a processor.

According to an eighth aspect, this application provides a communication apparatus, including a processor. The processor is configured to perform the communication method according to any one of the second aspect or the possible implementations of the second aspect.

Optionally, the apparatus further includes a memory, configured to store instructions and data. The memory is coupled to the processor. When the processor executes the instructions stored in the memory, the methods described in the foregoing aspects may be implemented.

Optionally, the apparatus further includes a communication interface. The communication interface is configured for the apparatus to communicate with another communication apparatus. For example, the communication interface may be a transceiver, a circuit, a bus, a module, a pin, or another type of communication interface.

For example, the communication apparatus provided in the eighth aspect is a chip or a chip system.

According to a ninth aspect, this application provides a communication apparatus, including a processor and a communication interface. The communication interface is configured to: receive a signal from a communication apparatus other than the communication apparatus and transmit the signal to the processor, or send a signal from the processor to a communication apparatus other than the communication apparatus. The processor implements the communication method according to any one of the second aspect or the possible implementations of the second aspect through a logic circuit or executing code instructions. For example, the communication interface may be a transceiver, a circuit, a bus, a module, a pin, or another type of communication interface.

Optionally, the apparatus further includes a memory, configured to store instructions and data. The memory is coupled to the processor. When the processor executes the instructions stored in the memory, the method described in the second aspect may be implemented.

According to a tenth aspect, this application provides a communication apparatus, including a processor and a memory. The memory is configured to store instructions and data. When executing the instructions stored in the memory, the processor may implement the communication method according to any one of the second aspect or the possible implementations of the second aspect.

Optionally, the apparatus further includes a communication interface. The communication interface is configured for the apparatus to communicate with another communication apparatus. For example, the communication interface may be a transceiver, a circuit, a bus, a module, a pin, or another type of communication interface.

For example, the communication apparatus in the ninth aspect or the tenth aspect is a network device.

According to an eleventh aspect, this application provides a computer-readable storage medium, including a computer program. When the computer program is run on a computer, the computer is enabled to implement the method according to any one of the first aspect or the second aspect or the possible implementations of the first aspect or the second aspect.

According to a twelfth aspect, this application provides a computer program product. The computer program product includes a computer program (also referred to as code or instructions). When the computer program is run, a computer is enabled to perform the method according to any one of the first aspect or the second aspect or the possible implementations of the first aspect or the second aspect.

According to a thirteenth aspect, a communication system is provided, and includes the foregoing terminal and network device.

The technical solutions of the third aspect to the thirteenth aspect of this application correspond to the technical solutions of the first aspect and the second aspect of this application, and beneficial effect achieved in the aspects and corresponding feasible implementations are similar. Details are not described again.

### BRIEF DESCRIPTION OF DRAWINGS

FIG. 1 is a diagram of an architecture of a communication system to which a communication method provided in this application is applicable;
FIG. 2 is a diagram of communication between a network device and a terminal to which a communication method provided in this application is applicable;
FIG. 3A is a diagram of a downlink channel sounding procedure in an LTE system;
FIG. 3B is a diagram of allocating resources by a network device;
FIG. 4 is a diagram of a time sequence for sounding a downlink channel in a WLAN system;
FIG. 5 is a diagram of a channel between a network device and a terminal according to an embodiment of this application;
FIG. 6 is a schematic flowchart of a communication method according to an embodiment of this application;
FIG. 7 is a diagram of a time sequence of a communication method according to an embodiment of this application;
FIG. 8 is another schematic flowchart of a communication method according to an embodiment of this application;
FIG. 9 is a schematic flowchart of performing reciprocity calibration on a radio frequency channel by a terminal according to an embodiment of this application;
FIG. 10 is another schematic flowchart of performing reciprocity calibration on a radio frequency channel by a terminal according to an embodiment of this application;
FIG. 11 is a diagram of a linear relationship between a frequency and a phase difference between radio frequency channels of a terminal;
FIG. 12 is a diagram of another time sequence of a communication method according to an embodiment of this application;
FIG. 13 is a diagram of a structure of a measurement apparatus according to an embodiment of this application;
FIG. 14 is a diagram of another structure of a measurement apparatus according to an embodiment of this application;
FIG. 15 is a diagram of a structure of a terminal according to an embodiment of this application; and
FIG. 16 is a diagram of a structure of a network device according to an embodiment of this application.

### DESCRIPTION OF EMBODIMENTS

The following describes technical solutions of this application with reference to accompanying drawings.

For ease of understanding of embodiments of this application, the following several descriptions are first provided.

First, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, prestored, pre-sintered, or preconfigured. Alternatively, indicating information A may be performed by using information B and a preset rule.

Second, in this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

Third, in this application, "at least one" indicates one or more, "a plurality of" indicates two or more. "And/Or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, a, b, and c each may be singular or plural.

Fourth, in embodiments of this application, prefix words such as "first" and "second" are merely used for distinguishing and describing different things belonging to a same name category, and are not intended to limit a sequence, sizes, or a quantity of things. For example, "first information" and "second information" are merely different information, and have no time sequence relationship, magnitude relationship, or priority relationship.

Fifth, "sending" and "receiving" in this application indicate a signal transmission direction. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of a chip interface.

In other words, sending and receiving may be performed between devices, for example, between a terminal and a network device; or sending or receiving may be performed inside a device, for example, between components, modules, chips, software modules, or hardware modules inside the device through a bus, a cable, or an interface.

Sixth, in embodiments of this application, both "when" and "if" mean that an apparatus performs corresponding processing in an objective situation, are not intended to limit time, do not require the apparatus to necessarily have a determining action during implementation, and do not mean another limitation.

Seventh, in this application, a word such as "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Specifically, use of the word "example", "for example", "such as", or "like" is intended to present a relative concept in a specific manner.

Eighth, in this specification, sounding of a downlink channel is used as an example to describe a communication method provided in this application. However, this should not constitute a limitation on a scenario to which the solution is applicable. In sounding of an uplink channel, after obtaining uplink channel state information (channel state information, CSI), a network device may also perform radio frequency channel reciprocity compensation on the network device, and perform reverse calculation on the uplink CSI, to obtain downlink CSI. This can reduce signaling overheads. A person skilled in the art may make a simple change based on the same idea and embodiments of this specification, to obtain the uplink CSI and the downlink CSI. For brevity, details are not described in this specification.

The technical solutions provided in embodiments of this application may be applicable to a wireless local area network (wireless local area network, WLAN) scenario, for example, support institute of electrical and electronics engineers (institute of electrical and electronics engineers, IEEE) 802.11 related standards, such as an 802.11a/b/g standard, an 802.11n standard, an 802.11ac standard, an 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be, like Wi-Fi 8; may be further applied to an ultra-wideband (ultra-wideband, UWB)-based wireless personal area network system, for example, 802.15 series standards; may be further applied to a sensing (sensing) system, for example, 802.11bf series standards; and may be further applied to an 802.11bn standard or an ultra-high reliability (ultra-high reliability, UHR) standard. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a highfrequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, a next-generation standard, and the like. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 series standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT) network, or vehicle-to-everything (vehicle to x, V2X).

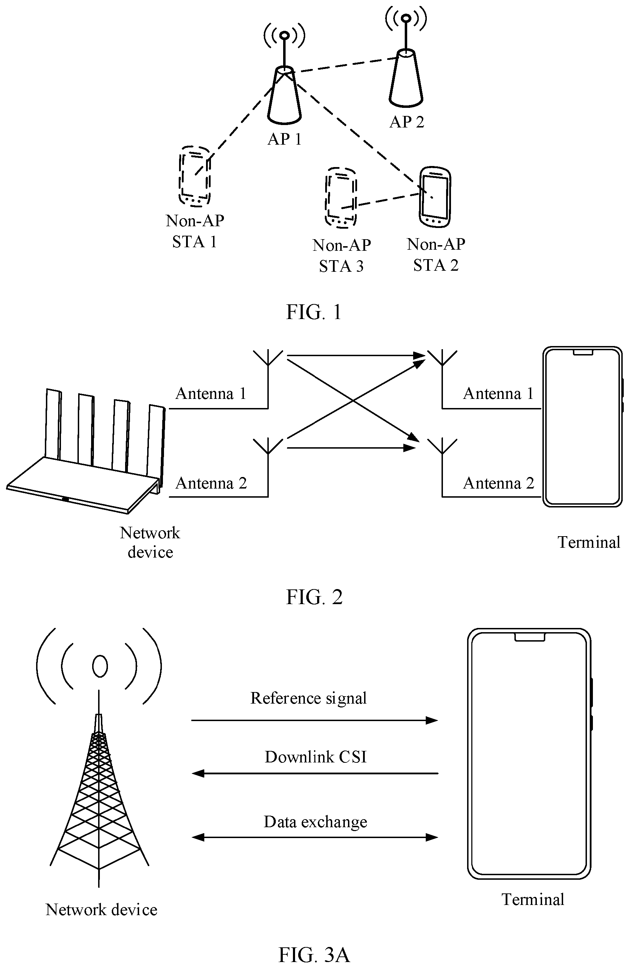

The foregoing communication systems to which this application is applicable only examples for description, and communication systems to which this application is applicable are not limited thereto. Unified descriptions are provided herein, and details are not described below. FIG. 1 is a diagram of an architecture of a communication system to which a communication method provided in this application is applicable. FIG. 1 is a diagram of a possible and nonlimiting system architecture. As shown in FIG. 1, the communication system includes a network device and a terminal. It should be understood that in FIG. 1, an example in which the network device is an access point (access point, AP) in a WLAN system is used, and an example in which the terminal is a station (station, STA) in the WLAN system is used. Quantities of network devices and terminals included in the communication system are not limited in embodiments of this application. For example, in FIG. 1, two APs and three STAs are used as an example.

The terminal may access a communication network via the network device. The terminal may be connected to the network device in a wireless manner, and the terminal may be at a fixed position or movable. The communication system may further include another network device, for example, may further include a core network device, a wireless relay device, and a wireless backhaul device, which are not shown in FIG. 1.

In some embodiments, the network device is an access device that is accessed by the terminal to the communication system in the wireless manner. For example, the network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access point (access point, AP) in a Wi-Fi system, or the like.

The terminal may also be referred to as a terminal device, user equipment (user equipment, UE), a mobile station (mobile station, MS), a mobile terminal (mobile terminal, MT), or the like. For example, the terminal may be a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In embodiments of this application, the terminal and the network device may be hardware devices, or may be software functions running on dedicated hardware or software functions running on general-purpose hardware, for example, virtualized functions instantiated on a platform (for example, a cloud platform), or may be entities including dedicated or general-purpose hardware devices and software functions. Specific forms of the terminal and the network device are not limited in this application.

It should be understood that in FIG. 1, the WLAN system is used as an example for description. The network device may be the AP, and the terminal may be the STA. In some embodiments, the STA may be a none access point station (none access point station, non-AP STA), and is referred to as a non-AP station or a STA for short. Specifically, the solutions of this application are applicable to data communication between an AP and one or more non-AP stations (for example, data communication between an AP 1 and each of a non-AP STA 1 and a non-AP STA 2 in FIG. 1), and are also applicable to data communication between APs (for example, data communication between the AP 1 and an AP 2 in FIG. 1) and data communication between non-AP STAs (for example, data communication between the non-AP STA 2 and a non-AP STA 3 in FIG. 1).

An access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects the wired network and the wireless network, and is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, 802.11ay, 802.11bn, and 802.11bf.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a vehicle-mounted device, an internet of things device, a wearable device, a terminal in a 5G network, a terminal in a 6G network, a terminal in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, 802.11ay, and 802.11bf.

For example, the non-AP station may be a mobile phone, a tablet computer, a set-top box, a smart television, a smart wearable device, a vehicle-mounted communication device, a computer, an internet of things (internet of things, IoT) node, a sensor, a smart camera, a smart remote control, or a smart water/electricity meter in a smart home, a sensor in a smart city, and the like.

The AP or the non-AP station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

To better understand the method provided in embodiments of this application, the following briefly describes terms in this application.
1. Channel reciprocity: It may be considered that channel fading experienced by uplink channel transmission and downlink channel transmission is the same in short time (coherence time of signal propagation). It should be understood that a focus of embodiments of this application is to discuss reciprocity of a radio frequency channel (or a link) in a device. It should be understood that uplink and downlink channels in the following embodiments are an uplink channel and a downlink channel.
2. Reciprocity calibration: In embodiments of this application, calibration is performed on a downlink channel (for example, a receive channel in a radio frequency channel corresponding to the terminal) and an uplink channel (for example, a transmit channel in the radio frequency channel corresponding to the terminal), to obtain difference information between the downlink channel and the uplink channel during signal receiving and sending. In some embodiments, the difference information may include a delay difference and/or a phase difference. In some embodiments, the difference information between the downlink channel and the uplink channel during signal receiving and sending may be referred to as a reciprocity calibration result.
3. Reciprocity compensation: In embodiments of this application, downlink CSI is processed based on a reciprocity calibration result to obtain uplink CSI, or reciprocity compensation (or reverse calculation) is performed on uplink CSI based on a reciprocity calibration result to obtain downlink CSI.
4. Reference signal (reference signal, RS): A reference signal may be used for channel sounding, channel estimation, and the like.

According to an LTE protocol or a NR protocol, a downlink reference signal may include, for example, a synchronization signal block (synchronization signal block, SSB), a physical downlink control channel (physical downlink control channel, PDCCH)-demodulation reference signal (PDCCH-DMRS), a physical downlink shared channel (physical downlink shared channel, PDSCH)-demodulation reference signal (PDSCH-DMRS), a PTRS, a channel state information reference signal (channel state information reference signal, CSI-RS), a cell signal (cell reference signal, CRS) in LTE, a time/frequency domain tracking synchronization signal (tracking reference signal, TRS) in NR, and a downlink positioning signal (positioning RS). An uplink reference signal may include, for example, a sounding reference signal (sounding reference signal, SRS), a physical uplink control channel (physical uplink control channel, PUCCH)-demodulation reference signal (demodulation reference signal, DMRS) (PUCCH-DMRS), a physical uplink shared channel (physical uplink shared channel, PUSCH)-demodulation reference signal (PUSCH-DMRS), a phase noise tracking reference signal (phase noise tracking reference signal, PTRS), and an uplink positioning signal (uplink positioning RS).

According to a WLAN protocol, the reference signal may be, for example, a null data packet (null data packet announcement, NDP) frame.

5. Reference signal configuration: A reference signal configuration may include two parts: a reference signal resource configuration and a report configuration. The following uses the RS configuration as an example.

The report configuration may be used to configure a parameter related to CSI report, for example, "ReportConfigId (ReportConfigId)", "reportConfigType (reportConfigType)", and "reportQuantity (reportQuantity)". "reportConfigId" may indicate information to be reported. "reportConfigType" is used to configure a report type, and may be specifically classified into periodic report, semi-persistent report, and aperiodic report. "reportQuantity" may be used to configure the information to be reported, for example, including a precoding matrix indicator (precoding matrix indicator, PMI), a rank indicator (rank indicator, RI), a layer indicator (layer indicator, LI), a channel quality indicator (channel quality indicator, CQI), reference signal received power (reference signal received power, RSRP), reference signal received quality (reference signal received quality, RSRQ), a signal to noise ratio (signal to noise ratio, SNR), and a signal to interference-noise ratio (signal to interference-noise ratio, SINR). Different information may be reported through different configurations.

The reference signal resource configuration may be used to configure information related to an RS resource, for example, "CSI-ResourceConfigId (CSI-ResourceConfigId)", and an RS resource used for sounding.

It should be understood that embodiments of this application are applicable to various communication scenarios, and are particularly applicable to a multi-in-multi-out (multi-in-multi-out, MIMO) scenario. In the multi-in-multi-out (multi-in-multi-out, MIMO) scenario, both a network device and a terminal use two or more antennas to perform information transmission, and an antenna system of a plurality of channels is formed between receiving and sending. Information is independently sent through different antennas. This can improve channel utilization.

With reference to FIG. 2, a MIMO communication system is briefly described herein, to facilitate understanding of the communication method provided in embodiments of this application.

For example, a network device includes two antennas, and a terminal includes two antennas. The network device and the terminal form the 2×2 MIMO communication system. In the 2×2 MIMO communication system, space may be layered, and different information may be sent at different layers. This layering manner may be referred to as spatial multiplexing. After spatial multiplexing, MIMO may be classified into SU-MIMO and MU-MIMO. SU-MIMO indicates a layer used by a single user, and MU-MIMO indicates that a layer is allocated to different users for use.

Refer to FIG. 2. For example, the two antennas of the network device are an antenna 1 and an antenna 2, and the two antennas of the terminal are an antenna 1 and an antenna 2. In the 2×2 MIMO communication system, four spatial streams may be included. The four spatial streams are respectively a spatial stream 1 from the antenna 1 of the network device to the antenna 1 of the terminal, a spatial stream 2 from the antenna 1 of the network device to the antenna 2 of the terminal, a spatial stream 3 from the antenna 2 of the network device to the antenna 1 of the terminal, and a spatial stream 4 from the antenna 2 of the network device to the antenna 2 of the terminal.

In some embodiments, a spatial stream may be considered as a subchannel of a channel between the network device and the terminal. For example, refer to FIG. 2, the channel between the network device and the terminal may be divided into four subchannels, and each spatial stream may be used as one subchannel. For example, the channel between the network device and the terminal may be divided into four subchannels, which are respectively a subchannel 1 (a channel between the antenna 1 of the network device and the antenna 1 of the terminal), a subchannel 2 (a channel between the antenna 1 of the network device and the antenna 2 of the terminal), a subchannel 3 (a channel between the antenna 2 of the network device and the antenna 1 of the terminal), and a subchannel 4 (a channel between the antenna 2 of the network device and the antenna 2 of the terminal).

For example, the network device sends a signal X1 through the antenna 1, and sends a signal X2 through the antenna 2. Due to impact of downlink channels, a signal received by the terminal through the antenna 1 is Y1, and a signal received by the terminal through the antenna 2 is Y2. In this case, downlink channel information may be determined based on the signals X1 and X2 sent by a transmitter (the network device) and the signals Y1 and Y2 received by a receiver (the terminal). For example, a downlink transmission matrix that reflects the downlink channel information may be referred to as an H matrix, and the H matrix may satisfy, for example, the following Formula 1: $\left(\begin{matrix}{Y}_{1} \\ {Y}_{2}\end{matrix}\right) = \left(\begin{matrix}{h}_{11} & {h}_{21} \\ {h}_{12} & {h}_{22}\end{matrix}\right) \left(\begin{matrix}{X}_{1} \\ {X}_{2}\end{matrix}\right)$

Herein, each of h₁₁, h₁₂, h₂₁, and h₂₂ in the H matrix represents channel information of each subchannel for 2×2 MIMO transmission. For example, h₁₁ is a channel transmission coefficient of the subchannel 1, h₁₂ is a channel transmission coefficient of the subchannel 2, h₂₁ is a channel transmission coefficient of the subchannel 3, and h₂₂ is a channel transmission coefficient of the subchannel 4.

Currently, in an LTE system, to improve channel resource utilization, a channel between a network device and a terminal may be divided into a plurality of subchannels (subchannels) or subbands (subbands). The following uses the subchannels as an example for description. Different subchannels have different frequencies. To ensure communication quality between the network device and the terminal, the network device may perform frequency selection, that is, determine a specific subchannel on which downlink information (signaling and/or data) is sent to the terminal. Refer to FIG. 3A. The network device may deliver a reference signal to the terminal, and the terminal sounds (or estimates) a downlink channel based on the received reference signal, to obtain CSI of the downlink channel, and feeds back the CSI of the downlink channel to the network device. The CSI of the downlink channel may include CSI of each downlink subchannel. The network device may perform frequency selection based on the CSI of each downlink subchannel, and determine configurations such as a resource of the downlink channel, a modulation and coding scheme (modulation and coding scheme, MCS), and precoding of the terminal.

In some embodiments, the CSI of the downlink channel may be referred to as downlink channel state information (downlink CSI) for short, and CSI of an uplink channel may be referred to as uplink channel state information (uplink CSI) for short.

As various terminals increasingly penetrate into daily life, more mobile applications impose higher requirements on network communication quality. With the promotion of applications such as a wireless office, a video conference, a short video, AR, and VR, a user has a high requirement on communication quality (such as a download speed and a video loading speed) of the downlink channel and a higher requirement on communication quality (such as multimedia resource upload) of the uplink channel.

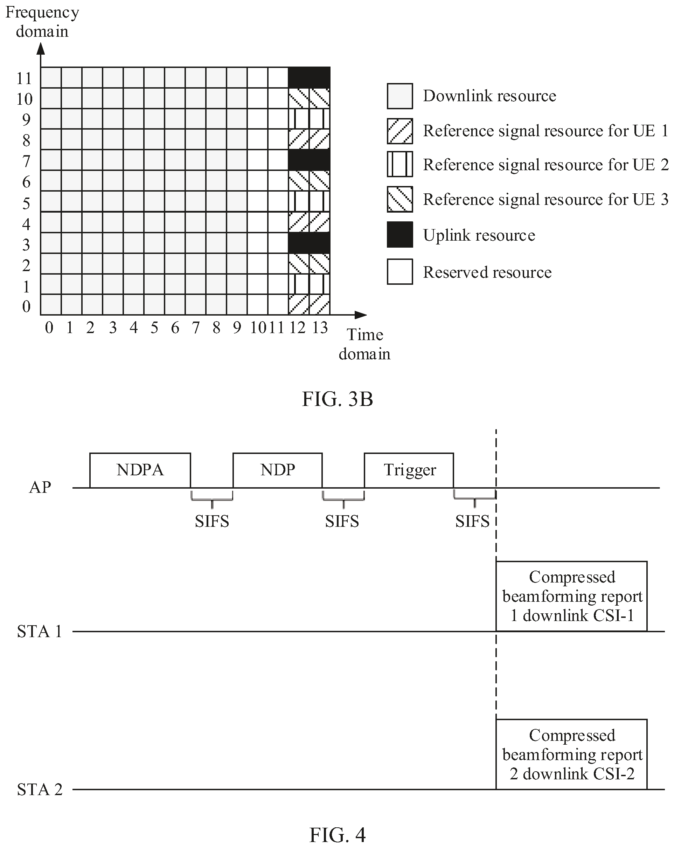

To ensure communication quality of the uplink channel, the uplink channel may be sounded currently. According to an LTE related protocol, the network device may allocate, to the terminal, a resource for sending a reference signal, and the terminal may send the reference signal to the network device on the resource. After receiving the reference signal, the network device may sound the uplink channel, to obtain the uplink CSI. In some embodiments, the network device may simultaneously communicate with a plurality of terminals, and because resources for sending reference signals by the terminals are not shared, the network device needs to allocate the resources to the terminals. Refer to FIG. 3B. To improve uplink channel sounding efficiency, the network device may allocate the resources to the plurality of terminals in frequency domain, and the terminals may send the reference signals to the network device on the corresponding resources. It should be understood that in FIG. 3B, an example in which the plurality of terminals include UE 1, UE 2, and UE 3 is used.

In some embodiments, to facilitate distinguishing between a reference signal sent by the network device to the terminal and a reference signal sent by the terminal to the network device, the reference signal sent by the network device to the terminal may be used as a downlink reference signal, and the reference signal sent by the terminal to the network device may be used as an uplink reference signal.

Currently, in the LTE system, when the uplink channel is sounded, the terminal needs to send the uplink reference signal to the network device, and the network device sounds the uplink channel based on the reference signal, to obtain uplink CSI. This results in large signaling overheads and low uplink channel sounding efficiency.

Currently, in the WLAN system, the downlink channel may also be sounded. Refer to FIG. 4. According to a WLAN related protocol, sounding of the downlink channel may include the following step 1 to step 4. The WLAN related protocol includes but is not limited to, for example, an IEEE 802.11 protocol, an IEEE 802.15 protocol, or IEEE 802.11.

Step 1: An AP broadcasts a null data packet announcement (null data packet announcement, NDPA) frame (or packet).

In the WLAN system, the AP may be considered as a network device, and a station (station, STA) device may be considered as a terminal.

Currently, the AP may broadcast the NDPA frame on all frequency band resources. The NDPA frame indicates a STA that participates in channel sounding this time, information that needs to be reported by the STA, and the like.

In some embodiments, for a format of the NDPA frame, refer to Table 1-1 and Table 1-2.

**Table 1-1**

| 2 bits | 2 bits | 6 bits | 6 bits | 1 bit | 4 bits | | 4 bits | 4 bits |
|---|---|---|---|---|---|---|---|---|
| Frame Control | Duration | RA | TA | Sounding Dialog Token | STA Info 1 | ··· | STA InfoN | FCS |

**Table 1-2**

| 11 bits | 14 bits | 2 bits | 1 bit | 1 bit | 3 bits |
|---|---|---|---|---|---|
| AID 11 | Partial BW Info (RU start) (RU end) 7 bits 7 bits | Feedback Type And Ng | Disambiguation | Codebook Size | Nc |

First four fields in Table 1-1 are a frame header of the NDPA frame. Frame Control indicates a protocol version and a frame type of the NDPA frame. Duration indicates a time period, and the time period indicates total transmission time of the NDPA frame, an NDP frame, and then channel information fed back by the terminal to the network device. If the NDPA frame carries only one piece of STA information (information, info), RA (receiver address) indicates a media access control (media access control, MAC) address of the terminal that needs to feed back the channel information. If the NDPA frame includes a plurality of pieces of STA info, RA is set to a broadcast address. TA (transmitter address) indicates an address of the network device that sends the NDPA frame. Sounding Dialog Token indicates an index of the NDPA frame determined by the network device. STA Info indicates information about a STA that participates in channel sounding this time, and STA Info1 to STA InfoN indicate information about a plurality of STAs that participate in channel sounding this time. FCS indicates a frame check sequence.

In Table 1-2, AID 11 indicates an association identifier of a terminal that needs to feed back channel information. Partial BW Info indicates a first 26-tone RU to a last 26-tone RU that need to feed back the channel information, where Partial BW Info may include RU start and RU end. RU start indicates the first 26-tone RU that needs to feed back the channel information, and RU end indicates the last 26-tone RU that needs to feed back the channel information. Feedback Type And Ng indicates channel information that needs to be fed back by the STA. The channel information may include but is not limited to a channel quality indicator (channel quality indicator, CQI), a multi-user compressed V (multi-user compressed V, MU CV) matrix, a single user compressed V (single user compressed V, SU CV) matrix, and the like. In some embodiments, MU CV and SU CV may be understood as a PMI. Disambiguation indicates to help the terminal to identify an HE NDPA frame. Codebook Size and Feedback Type And Ng together represent a quantization bit width for channel information feedback. Nc represents a quantity of streams, and the quantity of streams may be understood as a quantity of spatial streams in which information transmission can be performed in a MIMO communication system.

Step 2: After a short inter frame space (short inter frame space, SIFS), the AP broadcasts the NDP frame.

The NDP frame is used for channel sounding. In some embodiments, the NDP frame may be used as a reference signal.

After receiving the NDP frame, the STA may sound a downlink channel based on the NDP frame, to obtain downlink CSI.

Step 3: After an SIFS, the AP broadcasts a trigger (Trigger) frame.

The trigger frame indicates the STA to report channel state information.

In some embodiments, the trigger frame may include information such as a physical layer protocol data unit (PHY protocol data unit, PPDU) length and a modulation and coding scheme (modulation coding scheme, MCS).

Step 4: The STA reports the downlink CSI to the AP.

In the WLAN system, the AP does not allocate a frequency domain resource to the STA, but broadcasts the NDPA frame, the NDP frame, and the trigger frame on all the frequency band resources. Therefore, the STA that accesses the AP can receive the NDPA frame, the NDP frame, and the trigger frame. For example, refer to FIG. 4. A STA 1 and a STA 2 receive the NDPA frame, the NDP frame, and the trigger frame. After an SIFS since the trigger frame is received, the STA 1 may report downlink CSI-1 to the AP, and the STA 2 may report downlink CSI-2 to the AP.

In some embodiments, the downlink CSI may be carried in a compressed beamforming report (compressed beamforming report). For example, the STA 1 may report a compressed beamforming report 1 to the AP, where the compressed beamforming report 1 includes the downlink CSI-1. Similarly, the STA 2 may report a compressed beamforming report 2 to the AP, where the compressed beamforming report 2 includes the downlink CSI-2.

Currently, the WLAN related protocol does not disclose a communication method for an uplink channel.

In a possible scenario, the STA may report an uplink reference signal in a polling-based manner, to sound the uplink channel. For example, the AP may broadcast a trigger frame, where the trigger frame indicates the STA to send an NDP frame (which may be considered as an uplink reference signal), and the NDP frame is used by the AP to sound the uplink channel. The STA may send the NDP frame to the AP on all frequency bands in response to the trigger frame. After receiving the NDP frame, the AP may sound the uplink channel, to obtain uplink CSI. It should be understood that when there are a plurality of STAs that access the AP, the plurality of STAs may send NDP frames to the AP at different moments in response to the trigger frame, that is, the STAs may report uplink reference signals in a polling-based manner, so that the AP can sound the uplink channel based on the uplink reference signals.

In a possible scenario, in the WLAN system, a communication method, for an uplink channel, that is similar to that of an LTE system may be used. For example, the AP may pre-allocate, to the plurality of STAs on a frequency domain resource, a resource for sending an NDP frame, and broadcast a trigger frame. The plurality of STAs may send, in response to receiving the trigger frame, the NDP frames to the AP on the corresponding frequency domain resources. In this way, the AP may sound the uplink channel based on the NDP frames from the STAs, to obtain uplink CSI.

Currently, the communication method for the uplink channel is not disclosed in the WLAN system. In a possible implementation, when the uplink channel is sounded, the STA needs to send the uplink reference signal to the AP in the polling-based manner, and the AP sounds the uplink channel based on the uplink reference signal, to obtain the uplink CSI. This results in large signaling overheads, affects utilization efficiency of an air interface channel resource, and has low uplink channel sounding efficiency.

Currently, for sending a downlink reference signal by a network device to a terminal, transmission of the downlink reference signal includes two parts: spatial transmission and radio frequency transmission. In some embodiments, a channel between the network device and the terminal may be divided into a spatial channel and a radio frequency channel. A channel for spatial transmission may be referred to as a spatial channel, and a channel for radio frequency transmission may be referred to as a radio frequency channel.

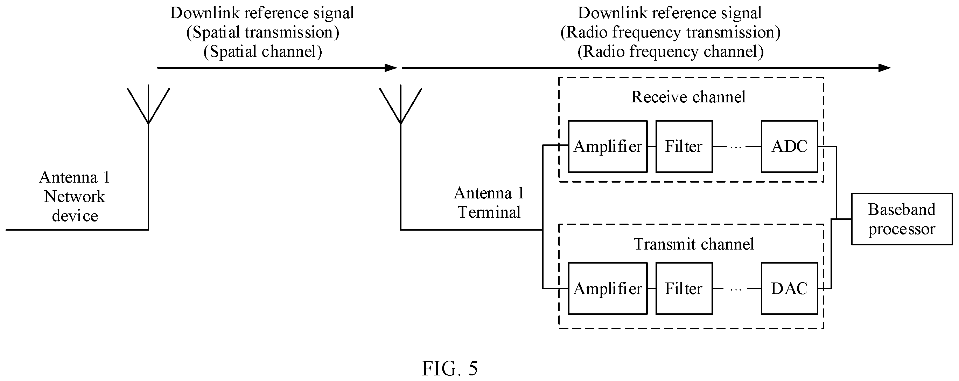

FIG. 5 is a diagram of a channel between a network device and a terminal according to an embodiment of this application. Refer to FIG. 5. A subchannel 1 between an antenna 1 of the network device and an antenna 1 of the terminal is used as an example. The network device transmits a downlink reference signal through the antenna 1 of the network device, and the downlink reference signal is received by the antenna 1 of the terminal through space transmission. After the antenna 1 receives the downlink reference signal, the downlink reference signal is processed by a radio frequency channel corresponding to the antenna 1 of the terminal, and arrives at a processor (for example, a baseband processor) of the terminal. The processor of the terminal may sound a downlink channel based on the downlink reference signal, to obtain downlink CSI.

Refer to FIG. 5. The radio frequency channel corresponding to the antenna 1 of the terminal includes a receive channel and a transmit channel. The receive channel may receive the downlink reference signal from the network device, and the transmit channel may send uplink information to the network device. In some embodiments, the receive channel may include but is not limited to an amplifier, a filter, an analog-to-digital converter (analogue to digital conversion, ADC), a baseband processor, and the like. The transmit channel may include but is not limited to a baseband processor, a digital-to-analog converter (digital to analogue conversion, DAC), a filter, an amplifier, and the like. After the antenna 1 of the terminal receives the downlink reference signal, elements in the receive channel may perform processing such as amplification, filtering, and analog-to-digital conversion on the downlink reference signal, and the baseband processor obtains the downlink CSI through calculation. For a signal transmitted by the terminal, elements in the transmit channel may perform processing such as digital-to-analog conversion, filtering, and amplification on the signal, and then transmit a processed signal through the antenna.

In conclusion, in a spatial transmission process, the downlink reference signal is not processed by a device or the like. Therefore, in the spatial transmission process, uplink and downlink channels in a spatial channel of coherent time have reciprocity. However, in a radio frequency transmission process, the receive channel and the transmit channel perform different processing on signals. Therefore, there is a delay difference and/or a phase difference in signal transmission in the receive channel and the transmit channel. To enable the uplink and the downlink channels in the radio frequency channel to have reciprocity, the terminal may perform reciprocity calibration on the radio frequency channel, to ensure that the uplink and downlink channels in the radio frequency channel have reciprocity.

In view of this, embodiments of this application provide a communication method. A terminal can perform reciprocity calibration on a radio frequency channel, to enable uplink and downlink channels between the terminal and a network device to have reciprocity. In this way, after sounding the downlink channel to obtain downlink CSI, the terminal may perform reverse calculation on the downlink CSI based on reciprocity of the uplink and downlink channels and a reciprocity calibration result of a radio frequency channel of the terminal, to complete sounding of the uplink channel and obtain uplink CSI.

In this application, the network device does not need to complete sounding of the uplink channel by using a method of sending, by the terminal, an uplink reference signal to the network device, to obtain the uplink CSI. Instead, the uplink CSI is obtained by performing reverse calculation based on the downlink CSI. This can reduce signaling overheads, and save air interface resources. In addition, the uplink CSI is obtained through calculation on the downlink CSI, and therefore the terminal can report the uplink CSI when reporting the downlink CSI, and does not need to sound the downlink channel and the uplink channel in sequence. This improves uplink channel sounding efficiency.

The following describes in detail the communication method provided in this application with reference to the accompanying drawings.

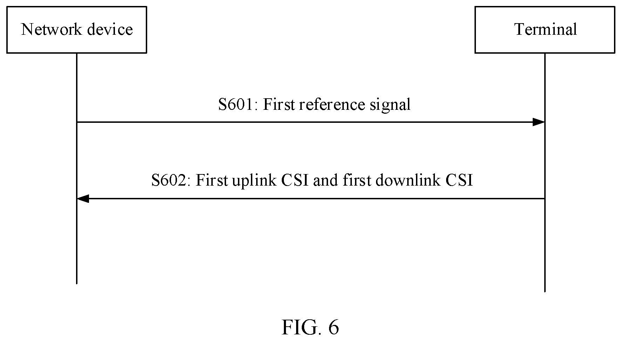

FIG. 6 is a schematic flowchart of a communication method according to an embodiment of this application. FIG. 6 describes the method by using an example of interaction between a network device and a terminal, which should not constitute any limitation on this application. The network device in FIG. 6 may alternatively be replaced with a component (for example, a chip, a chip system, or a processor) configured in a network device, or a logic module, software, or the like that can implement all or some functions of a network device. The terminal may be replaced with a component (for example, a chip, a chip system, or a processor) configured in a terminal, or a logic module, software, or the like that can implement all or some functions of a terminal.

As shown in FIG. 6, the communication method provided in embodiments of this application may include the following steps.

S601: The network device sends a first reference signal.

For example, the first reference signal is a downlink reference signal.

In an LTE system, the network device may send the first reference signal to the terminal. Correspondingly, the terminal receives the first reference signal. In a WLAN system, the network device may broadcast the first reference signal (for example, an NDP frame), and a terminal (STA) that has accessed the network device (for example, an AP) may receive the first reference signal.

In some embodiments, the network device may periodically or aperiodically send the first reference signal to the terminal. For example, in a scenario of aperiodically sending the first reference signal to the terminal, when a position change of the terminal exceeds a threshold, the network device may send the first reference signal to the terminal, to indicate the terminal to sound a downlink channel again. Alternatively, when downlink CSI indicates that network quality of the downlink channel is less than a threshold, the network device may send the first reference signal to the terminal, to indicate the terminal to sound a downlink channel again. The scenario of aperiodically sending the first reference signal to the terminal is not limited in embodiments of this application. In the following embodiment, an example in which the network device periodically sends the first reference signal to the terminal is used for description.

S602: The terminal sends first uplink channel state information to the network device, where the first uplink channel state information is obtained by performing radio frequency channel reciprocity compensation on first downlink channel state information, and the first downlink channel state information is obtained based on the first reference signal.

As mentioned above, the downlink reference signal is used by the terminal to sound a downlink channel, to obtain the downlink CSI. In embodiments of this application, the terminal may sound the downlink channel in response to receiving the first reference signal, and obtain the downlink CSI. This process is not described in embodiments of this application. For details, refer to descriptions in a related protocol. In some embodiments, the downlink CSI obtained based on the first reference signal may be referred to as the first downlink CSI. In other words, the first downlink CSI is obtained based on the first reference signal, or the first downlink CSI is obtained by sounding the downlink channel based on the first reference signal.

As mentioned above, to ensure reciprocity between uplink and downlink channels between the terminal and the network device, the terminal may perform reciprocity calibration on a radio frequency channel of the terminal, to obtain a reciprocity calibration result of the radio frequency channel. In embodiments of this application, the terminal may perform reciprocity compensation on the first downlink CSI based on the reciprocity calibration result, to obtain the first uplink CSI. In other words, the terminal performs reverse calculation on the first downlink CSI based on the reciprocity calibration result, to obtain the first uplink CSI, or the terminal performs reciprocity reverse calculation on the uplink channel based on the reciprocity calibration result, to obtain the first uplink CSI.

In some embodiments, the reciprocity calibration result of the radio frequency channel may include delay differences and/or phase differences between radio frequency channels corresponding to antennas. Refer to FIG. 5, for one antenna of the terminal, the antenna corresponds to one radio frequency channel, and the radio frequency channel corresponding to the antenna is a radio frequency channel connected to the antenna. For example, a signal received by the antenna may be transmitted to the radio frequency channel for processing, and a signal sent by the radio frequency channel may be transmitted through the antenna. One radio frequency channel includes a receive channel and a transmit channel. In other words, one antenna corresponds to one group of transmit and receive channels, and the transmit and receive channels include a receive channel and a transmit channel.

In some embodiments, that the terminal performs reciprocity calibration on the radio frequency channel may be understood as that the terminal performs reciprocity calibration on a radio frequency channel corresponding to each antenna. Correspondingly, the reciprocity calibration result of the radio frequency channel may include the delay differences and/or the phase differences between the radio frequency channels corresponding to the antennas. The delay differences and/or the phase differences between the radio frequency channels corresponding to the antennas may include delay differences and/or phase differences between transmit channels corresponding to the antennas and delay differences and/or phase differences between receive channels corresponding to the antennas. For example, the terminal includes an antenna 1 and an antenna 2. The reciprocity calibration result of the radio frequency channel may include a delay difference and/or a phase difference between a transmit channel corresponding to the antenna 1 of the terminal and a transmit channel corresponding to the antenna 2 of the terminal, and a delay difference and/or a phase difference between a receive channel corresponding to the antenna 1 of the terminal and a receive channel corresponding to the antenna 2 of the terminal.

Antenna numbers (for example, the antenna 1 and the antenna 2) in the foregoing embodiment may be considered as antenna indexes defined in a standard protocol. The antenna (for example, the antenna 1 and the antenna 2) in the reciprocity calibration result of the radio frequency channel may be used to receive a signal and send a signal. In this application, a quantity of transmit antennas of the terminal is equal to a quantity of spatial streams, and a quantity of receive antennas may be equal to a quantity of actual receive channels. The transmit antenna may send a signal, and the receive antenna may receive a signal.

A delay difference and/or a phase difference between radio frequency channels defined in embodiments of this application may actually be considered as a delay difference and/or a phase difference relative to a radio frequency channel corresponding to a reference antenna (for example, the antenna 1). For example, the terminal includes an antenna 1 and an antenna 2. The reference antenna may be the antenna 1 or the antenna 2. For example, the reference antenna is the antenna 1. The reciprocity calibration result of the radio frequency channel may include a delay difference and/or a phase difference between a radio frequency channel corresponding to the antenna 2 and a radio frequency channel corresponding to the antenna 1. Specifically, the reciprocity calibration result of the radio frequency channel may include a delay difference and/or a phase difference between a receive channel corresponding to the antenna 2 and a receive channel corresponding to the antenna 1, and a delay difference and/or a phase difference between a transmit channel corresponding to the antenna 2 and a transmit channel corresponding to the antenna 1.

For example, the terminal includes an antenna 1, an antenna 2, and an antenna 3. The reference antenna may be the antenna 1, the antenna 2, or the antenna 3. For example, the reference antenna is the antenna 1. The reciprocity calibration result of the radio frequency channel may include a delay difference and/or a phase difference between a radio frequency channel corresponding to the antenna 2 and a radio frequency channel corresponding to the antenna 1, and a delay difference and/or a phase difference between a radio frequency channel corresponding to the antenna 3 and the radio frequency channel corresponding to the antenna 1. Specifically, the reciprocity calibration result of the radio frequency channel may include a delay difference and/or a phase difference between a receive channel corresponding to the antenna 2 and a receive channel corresponding to the antenna 1, a delay difference and/or a phase difference between a receive channel corresponding to the antenna 3 and the receive channel corresponding to the antenna 1, a delay difference and/or a phase difference between a transmit channel corresponding to the antenna 2 and a transmit channel corresponding to the antenna 1, and a delay difference and/or a phase difference between a transmit channel corresponding to the antenna 3 and the transmit channel corresponding to the antenna 1.

It should be understood that the following embodiments are described by using an example in which the terminal includes an antenna 1 and an antenna 2. The solutions in this application are also applicable to a case in which the terminal includes more antennas. A person skilled in the art can use the solutions in this application through simple transformation made by the person skilled in the art on the basis of embodiments of this specification according to a same idea. Details are not described in this specification.

For example, the terminal includes the antenna 1 and an antenna 2. The reciprocity calibration result A of the radio frequency channel may be shown in the following Formula 2: $A = \left(\left({θ}_{r , 2}+2{πfτ}_{r , 2}\right)-\left({θ}_{r , 1}+2{πfτ}_{r , 1}\right)\right) - \left(\left({θ}_{t , 2}+2{πfτ}_{t , 2}\right)-\left({θ}_{t , 1}+2{πfτ}_{t , 1}\right)\right)$

Herein, θ_{*r*,2} represents an initial phase value of a receive channel corresponding to the antenna 2 of the terminal. θ_{*r*,1} represents an initial phase value of a receive channel corresponding to the antenna 1 of the terminal. θ_{*t*,2} represents an initial phase value of a transmit channel corresponding to the antenna 2 of the terminal. θ_{*t*,1} represents an initial phase value of a transmit channel corresponding to the antenna 1 of the terminal. τ_{*r*,2} represents a delay of the receive channel corresponding to the antenna 2 of the terminal. τ_{*r*,1} represents a delay of the receive channel corresponding to the antenna 1 of the terminal. τ_{*t*,2} represents a delay of the transmit channel corresponding to the antenna 2 of the terminal. τ_{*t*,1} represents a delay of the receive channel corresponding to the antenna 1 of the terminal.

For example, a reference antenna is the antenna 1. When the terminal includes more antennas, refer to Formula 2. A delay difference and/or a phase difference between a radio frequency channel corresponding to another antenna and a radio frequency channel corresponding to the antenna 1 may also be correspondingly obtained.

It should be understood that θ and ϕ in this application merely represent corresponding parameters, and are not limited to being applied to the terminal or the network device. Meanings of θ and ϕ may be determined with reference to the descriptions below Formula.

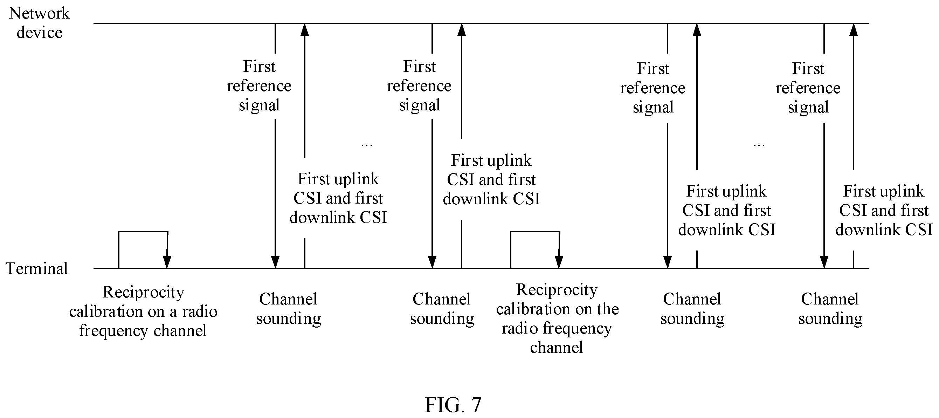

In some embodiments, refer to FIG. 7, after the terminal establishes a connection to the network device, the terminal may periodically perform reciprocity calibration on the radio frequency channel of the terminal. A reciprocity calibration result of the radio frequency channel may be stable for tens of minutes. For example, the network device periodically sends the first reference signal to the terminal, and a periodicity is usually of an order of magnitude of 10 ms. Therefore, a sounding periodicity of the downlink channel is far less than a reciprocity calibration periodicity of the radio frequency channel. In other words, after the terminal performs reciprocity calibration on the radio frequency channel once, the terminal may perform downlink channel sounding for at least once, that is, the network device may periodically send the first reference signal to the terminal for at least once. The terminal may sound the downlink channel once in response to each first reference signal, to obtain one piece of first downlink CSI. In addition, for the first downlink CSI, the terminal may perform reverse calculation on the first downlink CSI based on this reciprocity calibration result of the radio frequency channel, to obtain the first uplink CSI.

The following describes a process in which the terminal performs reverse calculation on the first downlink CSI based on the reciprocity calibration result of the radio frequency channel, to obtain the first uplink CSI.

A 2×2 MIMO communication system is used as an example. The first downlink CSI may be represented in a matrix form, as shown in the following Formula 3: $\begin{matrix}{H}_{DL} = \\ {e}^{j \left(2{πfτ}_{d , sync}\right)} \left[\begin{matrix}{e}^{j \left({ϕ}_{r , 1}+2πf{τ}_{sta}^{r , 1}\right)} & 0 \\ 0 & {e}^{j \left({ϕ}_{r , 2}+2πf{τ}_{sta}^{r , 2}\right)}\end{matrix}\right] \left[\begin{matrix}{h}_{11} \left(f\right) & {h}_{12} \left(f\right) \\ {h}_{21} \left(f\right) & {h}_{22} \left(f\right)\end{matrix}\right] \left[\begin{matrix}{e}^{j \left({θ}_{t , 1}+2πf{τ}_{ap}^{t , 1}\right)} & 0 \\ 0 & {e}^{j \left({θ}_{t , 2}+2πf{τ}_{ap}^{t , 2}\right)}\end{matrix}\right]\end{matrix}$

Herein, *τ_{d,sync}* represents a synchronization delay of the downlink channel between the network device and the terminal, and d represents the downlink channel. *ϕ*_{*r*,1} represents an initial phase value of a receive channel corresponding to the antenna 1 of the terminal. *ϕ*_{*r*,2} represents an initial phase value of a receive channel corresponding to the antenna 2 of the terminal. ${τ}_{sta}^{r , 1}$ represents a delay of the receive channel corresponding to the antenna 1 of the terminal. ${τ}_{sta}^{r , 2}$ represents a delay of the receive channel corresponding to the antenna 2 of the terminal. *θ*_{*t*,1} represents an initial phase value of a transmit channel corresponding to the antenna 1 of the network device. *θ*_{*t,*2} represents an initial phase value of a transmit channel corresponding to the antenna 2 of the network device. ${τ}_{ap}^{t , 1}$ represents a delay of the transmit channel corresponding to the antenna 1 of the network device. ${τ}_{ap}^{t , 2}$ represents a delay of the transmit channel corresponding to the antenna 2 of the network device. *h*₁₁(*f*) represents a channel transmission coefficient of a subchannel 1. *h*₁₂(*f*) represents a channel transmission coefficient of a subchannel 2. *h*₂₁(*f*) represents a channel transmission coefficient of a subchannel 3. *h*₂₂(*f*) represents a channel transmission coefficient of a subchannel 4

It should be noted that because there is a transposition processing between the uplink channel and the downlink channel in mathematical expressions, there is a position change of diagonal elements in $\left[\begin{matrix}{h}_{11} \left(f\right) & {h}_{12} \left(f\right) \\ {h}_{21} \left(f\right) & {h}_{22} \left(f\right)\end{matrix}\right]$ in Formula 3.

Similarly, the uplink CSI may also be represented in a matrix form, as shown in the following Formula 4: $\begin{matrix}{H}_{UL} = \\ {e}^{j \left(2{πfτ}_{u , sync}\right)} \left[\begin{matrix}{e}^{j \left({θ}_{r , 1}+2πf{τ}_{ap}^{r , 1}\right)} & 0 \\ 0 & {e}^{j \left({θ}_{r , 2}+2πf{τ}_{ap}^{r , 2}\right)}\end{matrix}\right] \left[\begin{matrix}{h}_{11} \left(f\right) & {h}_{21} \left(f\right) \\ {h}_{12} \left(f\right) & {h}_{22} \left(f\right)\end{matrix}\right] \left[\begin{matrix}{e}^{j \left({ϕ}_{t , 1}+2πf{τ}_{sta}^{t , 1}\right)} & 0 \\ 0 & {e}^{j \left({ϕ}_{t , 2}+2πf{τ}_{sta}^{t , 2}\right)}\end{matrix}\right]\end{matrix}$

Herein, *τ_{u, sync}* represents a synchronization delay of the uplink channel between the network device and the terminal, and u represents the uplink channel. θ_{*r*,1} represents an initial phase value of a receive channel corresponding to the antenna 1 of the network device. θ_{*r*,2} represents an initial phase value of a receive channel corresponding to the antenna 2 of the network device. ${τ}_{ap}^{r , 1}$ represents a delay of the receive channel corresponding to the antenna 1 of the network device. ${τ}_{ap}^{r , 2}$ represents a delay of the receive channel corresponding to the antenna 2 of the network device. ϕ_{*t*,1} represents an initial phase value of a transmit channel corresponding to the antenna 1 of the terminal. ϕ_{*t*,2} represents an initial phase value of a transmit channel corresponding to the antenna 2 of the terminal. ${τ}_{sta}^{r , 1}$ represents a delay of the transmit channel corresponding to the antenna 1 of the terminal. ${τ}_{sta}^{t , 2}$ represents a delay of the transmit channel corresponding to the antenna 2 of the terminal.

Because *e*^{*j*(2πfτ}*_{d,sync}*) and a common part of the initial phase values do not affect reverse calculation of channel state information, for ease of description, H*_{DL}* is first simplified, to obtain ${H}_{DL}^{T}$, as shown in the following Formula 5: $\begin{matrix}{H}_{DL}^{T} \\ = {e}^{j \left(2{πfτ}_{d , sync}\right)} \left[\begin{matrix}{e}^{j \left({θ}_{t , 1}+2{πfτ}_{ap}^{t , 1}\right)} & 0 \\ 0 & {e}^{j \left({θ}_{t , 2}+2{πfτ}_{ap}^{t , 2}\right)}\end{matrix}\right] \left[\begin{matrix}{h}_{11} \left(f\right) & {h}_{21} \left(f\right) \\ {h}_{12} \left(f\right) & {h}_{22} \left(f\right)\end{matrix}\right] \left[\begin{matrix}{e}^{j \left({ϕ}_{r , 1}+2{πfτ}_{sta}^{r , 1}\right)} & 0 \\ 0 & {e}^{j \left({ϕ}_{r , 2}+2{πfτ}_{sta}^{r , 2}\right)}\end{matrix}\right]\end{matrix}$

Reciprocity compensation processing is performed on ${H}_{DL}^{T}$ based on the reciprocity calibration result of the radio frequency channel, to obtain the first uplink CSI, which is represented by *H̃_{UL}.* For details, refer to the following Formula 6: $\begin{matrix}{{H}^{˜}}_{UL} = {U}_{θ} {H}_{DL}^{T} {U}_{ϕ} \\ = \left[\begin{matrix}1 & 0 \\ 0 & {e}^{j \left(\left(\left({θ}_{r , 2}+2πf{τ}_{ap}^{r , 2}\right)-\left({θ}_{r , 1}+2πf{τ}_{ap}^{r , 1}\right)\right)-\left(\left({θ}_{t , 2}+2πf{τ}_{ap}^{t , 2}\right)-\left({θ}_{t , 1}+2πf{τ}_{ap}^{t , 1}\right)\right)\right)}\end{matrix}\right] \left[\begin{matrix}{e}^{j \left({θ}_{t , 1}+2πf{τ}_{ap}^{t , 1}\right)} & 0 \\ 0 & {e}^{j \left({θ}_{t , 2}+2πf{τ}_{ap}^{t , 2}\right)}\end{matrix}\right] \left[\begin{matrix}{h}_{11} \left(f\right) & {h}_{21} \left(f\right) \\ {h}_{12} \left(f\right) & {h}_{22} \left(f\right)\end{matrix}\right] . \\ \left[\begin{matrix}{e}^{j \left({ϕ}_{r , 1}+2πf{τ}_{sta}^{r , 1}\right)} & 0 \\ 0 & {e}^{j \left({ϕ}_{r , 2}+2πf{τ}_{sta}^{r , 2}\right)}\end{matrix}\right] \left[\begin{matrix}1 & 0 \\ 0 & {e}^{- j \left(\left(\left({ϕ}_{r , 2}+2πf{τ}_{sta}^{r , 2}\right)-\left({ϕ}_{r , 1}+2πf{τ}_{sta}^{r , 1}\right)\right)-\left(\left({ϕ}_{r , 2}+2πf{τ}_{sta}^{t , 2}\right)-\left({ϕ}_{t , 1}+2πf{τ}_{sta}^{t , 1}\right)\right)\right)}\end{matrix}\right] \\ = \left[\begin{matrix}1 & 0 \\ 0 & {e}^{j \left(\left({θ}_{r , 2}+2πf{τ}_{ap}^{r , 2}\right)-\left({θ}_{r , 1}+2πf{τ}_{ap}^{r , 1}\right)\right)}\end{matrix}\right] \left[\begin{matrix}{h}_{11} \left(f\right) & {h}_{21} \left(f\right) \\ {h}_{12} \left(f\right) & {h}_{22} \left(f\right)\end{matrix}\right] ⋅ \left[\begin{matrix}1 & 0 \\ 0 & {e}^{j \left(\left({ϕ}_{t , 2}+2πf{τ}_{sta}^{t , 2}\right)-\left({ϕ}_{t , 1}+2πf{τ}_{sta}^{t , 1}\right)\right)}\end{matrix}\right]\end{matrix}$

Herein, *U_{θ}* represents a reciprocity calibration result of a radio frequency channel of the network device. *U_{ϕ}* represents the reciprocity calibration result of the radio frequency channel of the terminal. In this application, the terminal sounds the downlink channel to obtain the first downlink CSI, and the terminal performs reverse calculation based on the first downlink CSI, to obtain the first uplink CSI. Therefore, only the reciprocity calibration result of the radio frequency channel of the terminal needs to be used, and the reciprocity calibration result of the radio frequency channel of the network device does not need to be considered. Therefore, in this application, the terminal may perform reciprocity compensation processing on ${H}_{DL}^{T}$ based on the reciprocity calibration result of the radio frequency channel of the terminal, to obtain the first uplink CSI, which is represented by ${{H}^{˜}}_{UL}^{′}$, as shown in the following Formula 7: $\begin{matrix}{{H}^{˜}}_{UL}^{′} = {H}_{DL}^{T} {U}_{ϕ} = \left[\begin{matrix}{e}^{j \left({θ}_{t , 1}+2πf{τ}_{ap}^{t , 1}\right)} & 0 \\ 0 & {e}^{j \left({θ}_{t , 2}+2πf{τ}_{ap}^{t , 2}\right)}\end{matrix}\right] \left[\begin{matrix}{h}_{11} \left(f\right) & {h}_{21} \left(f\right) \\ {h}_{12} \left(f\right) & {h}_{22} \left(f\right)\end{matrix}\right] . \\ \left[\begin{matrix}{e}^{j \left({ϕ}_{r , 1}+2πf{τ}_{sta}^{r , 1}\right)} & 0 \\ 0 & {e}^{j \left({ϕ}_{r , 2}+2πf{τ}_{sta}^{r , 2}\right)}\end{matrix}\right] \left[\begin{matrix}1 & 0 \\ 0 & {e}^{- j \left(\left(\left({ϕ}_{r , 2}+2πf{τ}_{sta}^{r , 2}\right)-\left({ϕ}_{r , 1}+2πf{τ}_{sta}^{r , 1}\right)\right)-\left(\left({ϕ}_{t , 2}+2πf{τ}_{sta}^{t , 2}\right)-\left({ϕ}_{t , 1}+2πf{τ}_{sta}^{t , 1}\right)\right)\right)}\end{matrix}\right] \\ = \left[\begin{matrix}{e}^{j \left({θ}_{t , 1}+2πf{τ}_{ap}^{t , 1}\right)} & 0 \\ 0 & {e}^{j \left({θ}_{t , 2}+2πf{τ}_{ap}^{t , 2}\right)}\end{matrix}\right] \left[\begin{matrix}{h}_{11} \left(f\right) & {h}_{21} \left(f\right) \\ {h}_{12} \left(f\right) & {h}_{22} \left(f\right)\end{matrix}\right] ⋅ \left[\begin{matrix}1 & 0 \\ 0 & {e}^{j \left(\left({ϕ}_{t , 2}+2πf{τ}_{sta}^{t , 2}\right)-\left({ϕ}_{t , 1}+2πf{τ}_{sta}^{t , 1}\right)\right)}\end{matrix}\right]\end{matrix}$

According to Formula 7, it can be learned that there is an association relationship between the first uplink CSI $\left({{H}^{˜}}_{UL}^{′}\right)$ and the delay difference and/or the phase difference between the radio frequency channels corresponding to the first reference signal. The radio frequency channel corresponding to the first reference signal may be understood as a radio frequency channel that receives the first reference signal in the terminal. For example, the terminal includes an antenna 1 and an antenna 2, and both the antenna 1 and the antenna 2 receive the first reference signal. In this case, the radio frequency channel corresponding to the first reference signal may include a radio frequency channel corresponding to the antenna 1 and a radio frequency channel corresponding to the antenna 2 of the terminal. In Formula 7, $\left({ϕ}_{r , 2}+2πf{τ}_{sta}^{r , 2}\right) - \left({ϕ}_{r , 1}+2πf{τ}_{sta}^{r , 1}\right)$ represents a phase difference and a delay difference between the receive channel corresponding to the antenna 2 of the terminal and the receive channel corresponding to the antenna 1 of the terminal, ϕ_{*r*,2} - ϕ_{*r*,1} represents the phase difference between the receive channel corresponding to the antenna 2 of the terminal and the receive channel corresponding to the antenna 1 of the terminal, and $2 πf {τ}_{sta}^{r , 2} - 2 πf {τ}_{sta}^{r , 1}$ represents the delay difference between the receive channel corresponding to the antenna 2 of the terminal and the receive channel corresponding to the antenna 1 of the terminal. In Formula 7, $\left({ϕ}_{r , 2}+2πf{τ}_{sta}^{r , 2}\right) - \left({ϕ}_{r , 1}+2πf{τ}_{sta}^{r , 1}\right)$ represents a phase difference and a delay difference between the transmit channel corresponding to the antenna 2 of the terminal and the transmit channel corresponding to the antenna 1 of the terminal, ϕ_{*t*,2} - ϕ_{*t*,1} represents the phase difference between the transmit channel corresponding to the antenna 2 of the terminal and the transmit channel corresponding to the antenna 1 of the terminal, and $2 πf {τ}_{sta}^{t , 2} - 2 πf {τ}_{sta}^{t , 1}$ represents the delay difference between the transmit channel corresponding to the antenna 2 of the terminal and the transmit channel corresponding to the antenna 1 of the terminal.

It should be understood that in Formula 7, an example in which the reciprocity calibration result *U_{ϕ}* of the radio frequency channel of the terminal includes the phase difference and the delay difference between the receive channel corresponding to the antenna 2 of the terminal and the receive channel corresponding to the antenna 1 of the terminal, and the phase difference and the delay difference between the transmit channel corresponding to the antenna 2 of the terminal and the transmit channel corresponding to the antenna 1 of the terminal is used. In some embodiments, *U_{ϕ}* may include the phase difference and/or the delay difference between the receive channel corresponding to the antenna 2 of the terminal and the receive channel corresponding to the antenna 1 of the terminal, and the phase difference and/or the delay difference between the transmit channel corresponding to the antenna 2 and the transmit channel corresponding to the antenna 1.

In other words, there is the association relationship between the first uplink CSI and the delay difference and/or the phase difference between the radio frequency channels corresponding to the first reference signal. The delay difference and/or the phase difference between the radio frequency channels may include a delay difference and/or a phase difference between receive channels of the terminal. In other words, there is an association relationship between the first uplink CSI and the delay difference and/or the phase difference between the receive channels corresponding to the first reference signal. The receive channel corresponding to the first reference signal may be understood as a receive channel in the radio frequency channel corresponding to the first reference signal. For example, the terminal includes an antenna 1 and an antenna 2. If both the antenna 1 and the antenna 2 receive the first reference signal, the radio frequency channel corresponding to the first reference signal may include a radio frequency channel corresponding to the antenna 1 and a radio frequency channel corresponding to the antenna 2 of the terminal, and the receive channel corresponding to the first reference signal includes a receive channel in the radio frequency channel corresponding to the antenna 1 and a receive channel in the radio frequency channel corresponding to the antenna 2. A transmit channel corresponding to the first reference signal includes a transmit channel in the radio frequency channel corresponding to the antenna 1 and a transmit channel in the radio frequency channel corresponding to the antenna 2.

In embodiments of this application, after obtaining the first downlink CSI and the first uplink CSI, the terminal may report the first downlink CSI and the first uplink CSI to the network device.

For example, the first downlink CSI and the first uplink CSI may be carried in one message. In a WLAN system, for example, the first downlink CSI and the first uplink CSI may be carried in a compressed beamforming report. In some embodiments, the STA may encapsulate the first downlink CSI and the first uplink CSI in the compressed beamforming report, where the first uplink CSI and the first downlink CSI may be written on a resource on which the first downlink CSI is located, or the first uplink CSI may be written on a reserved resource.

For example, the first downlink CSI and the first uplink CSI may be carried in different messages. For example, the terminal may first send the first downlink CSI to the network device, and then send the first uplink CSI to the network device. For example, when obtaining the first downlink CSI through calculation, the terminal may first send the first downlink CSI to the network device, and when the terminal performs reverse calculation on the first downlink CSI to obtain the first uplink CSI, the terminal may send the first uplink CSI to the network device. Alternatively, after the terminal obtains the first downlink CSI and the first uplink CSI, the terminal may first send the first downlink CSI to the network device, and then send the first uplink CSI to the network device. This is not limited in embodiments of this application. In the WLAN system, for example, the STA reports the first downlink CSI and the first uplink CSI to the AP. The STA may include the first downlink CSI in the compressed beamforming report, and send the compressed beamforming report to the network device. After sending the compressed beamforming report, the STA may send, to the network device, a message (or information) carrying the first uplink CSI.

It should be understood that FIG. 6 shows steps in which the terminal reports the first downlink CSI and the first uplink CSI to the network device.

In embodiments of this application, the network device sends the first reference signal to the terminal. The terminal can sound the downlink channel based on the first reference signal, to obtain the first downlink CSI. The terminal can perform reverse calculation (or reciprocity compensation) on the first downlink CSI based on the reciprocity calibration result of the radio frequency channel of the terminal, to obtain the first uplink CSI. In embodiments of this application, the uplink channel is sounded without a signaling interaction manner, but based on channel reciprocity. Specifically, reverse calculation is performed on the downlink CSI to obtain the uplink CSI. This can reduce signaling overheads, save air interface resources, and improve uplink channel sounding efficiency.

In the embodiment shown in FIG. 6, the terminal has a capability of reporting the downlink CSI and the uplink CSI. That the terminal has the capability of reporting the downlink CSI and the uplink CSI may be understood as that the terminal includes the uplink CSI in the downlink CSI when reporting the downlink CSI, or the terminal may obtain the uplink CSI based on the downlink CSI and the reciprocity calibration result of the radio frequency channel of the terminal, and the terminal may include the uplink CSI in the downlink CSI when reporting the downlink CSI.

In some embodiments, the terminal may report, to the network device, that the terminal has the capability of reporting the downlink CSI and the uplink CSI. For example, the terminal may send second information to the network device, where the second information indicates that the terminal has the capability of reporting the downlink CSI and the uplink CSI.

In the WLAN system, that the terminal accesses the network device (AP) may include three steps, and the three steps are respectively scanning, authentication, and association. In some embodiments, the terminal may send the second information to the network device in the association step.

According to a current WLAN related protocol, in an association process, the terminal may send an association request to the network device, where the association request may include various parameters of the terminal and various parameters selected based on a service configuration. For example, the association request may include a rate and a channel supported by the terminal, and an access authentication algorithm, an encryption algorithm, and the like that are selected. In embodiments of this application, the association request may carry the second information. Alternatively, the association request may carry information indicating that the terminal has the capability of reporting the downlink CSI and uplink CSI, and the association request may be considered as the second information.

In some embodiments, the terminal may alternatively send the second information to the network device after the association step.

Similarly, in the LTE system, the terminal may send the second information to the network device in a process of establishing a connection to the network device. For example, according to a current LTE protocol, in some embodiments, the terminal may include the second information in capability information when reporting the capability information of the terminal to the network device. Alternatively, the terminal may send the second information to the network device after establishing a connection to the network device.

In embodiments of this application, in a process in which the terminal establishes the connection to the network device, or after the terminal accesses the network device, because the terminal may report the capability information of the terminal to the network device, the network device may determine, based on the capability information of the terminal, whether the terminal has the capability of reporting the downlink CSI and the uplink CSI. When the terminal does not have the capability of reporting the downlink CSI and the uplink CSI, the network device may obtain the uplink CSI by using a communication method of the uplink channel in an existing protocol. When the terminal has the capability of reporting the downlink CSI and the uplink CSI, the network device and the terminal may obtain the downlink CSI and the uplink CSI by using the communication method provided in embodiments of this application.

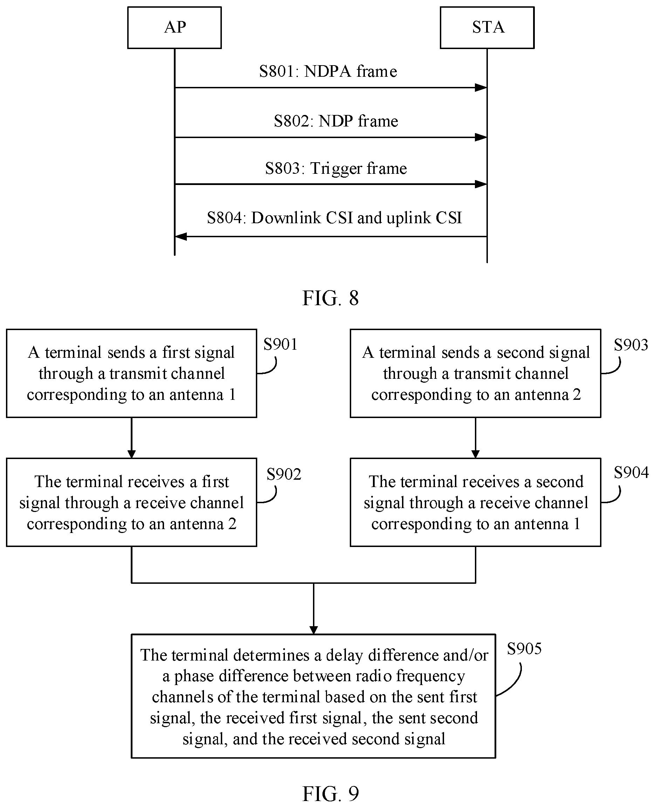

In some embodiments, the second information further indicates whether the terminal supports radio frequency channel reciprocity calibration. In this way, the network device can determine, based on the second information, whether the terminal supports radio frequency channel reciprocity calibration. When the terminal supports radio frequency channel reciprocity calibration, the terminal may complete reciprocity calibration of the radio frequency channel without participation of the network device. For details, refer to an embodiment in FIG. 9. When the terminal does not support radio frequency channel reciprocity calibration, the terminal needs to interact with the network device, and the terminal implements radio frequency channel reciprocity calibration. For details, refer to an embodiment in FIG. 10.

Regardless of being in the LTE system or the WLAN system, when indicating the terminal to sound the downlink channel, the network device may indicate information reported by the terminal. For example, in the LTE system, the network device may perform report configuration, so that the terminal can determine, based on the report configuration, a parameter related to CSI report. The report configuration may be configured in the first reference signal. In embodiments of this application, the terminal has the capability of reporting the downlink CSI and the uplink CSI. The network device may configure, in the report configuration, the parameter related to CSI report where the parameter related to CSI report indicates the uplink CSI and the downlink CSI. In this way, the terminal can determine, based on the report configuration, that the uplink CSI and the downlink CSI need to be reported in sounding of the downlink channel this time.

For example, in the WLAN system, the network device may send an NDPA frame to the terminal, where the NDPA frame indicates information that needs to be reported by the terminal. In some embodiments, the NDPA frame may be considered as first information, and the first information indicates to report the downlink CSI and the uplink CSI. For example, a feedback type indication bit in the NDPA frame may indicate to report the downlink CSI and the uplink CSI.

The following uses a WLAN system as an example to describe the communication method provided in embodiments of this application. As shown in FIG. 8, the communication method provided in embodiments of this application may include the following steps.

S801: An AP broadcasts an NDPA frame.

S802: After an SIFS, the AP broadcasts an NDP frame.

S803: After an SIFS, the AP broadcasts a trigger frame.

S804: A STA reports downlink CSI and uplink CSI to the AP.

The STA may determine, based on the NDPA frame, that the uplink CSI and the downlink CSI need to be reported in sounding of a downlink channel this time, and the STA may sound the downlink channel based on the NDP frame, to obtain the downlink CSI. The STA may perform reverse calculation on the downlink CSI based on a reciprocity calibration result of a radio frequency channel of the terminal, to obtain the uplink CSI. For details, refer to descriptions in S602. Therefore, the STA can report the downlink CSI and the uplink CSI to the AP.

The foregoing embodiment describes a method in which the terminal performs reverse calculation on the downlink CSI based on the reciprocity calibration result of the radio frequency channel to obtain the uplink CSI. In some embodiments, the terminal may support self-calibration, that is, the terminal may perform reciprocity calibration on the radio frequency channel, to obtain a delay difference and/or a phase difference between the radio frequency channels of the terminal. For example, the terminal includes an antenna 1 and an antenna 2. The delay difference and/or the phase difference between the radio frequency channels includes a delay difference and/or a phase difference between a receive channel corresponding to the antenna 1 and a receive channel corresponding to the antenna 2.

For example, a terminal includes two antennas, and the two antennas are an antenna 1 and an antenna 2. Refer to FIG. 9, the terminal may perform the following steps to perform reciprocity calibration on a radio frequency channel:
S901: The terminal sends a first signal through a transmit channel corresponding to the antenna 1.

S902: The terminal receives a first signal through a receive channel corresponding to the antenna 2.

S903: The terminal sends a second signal through a transmit channel corresponding to the antenna 2.

S904: The terminal receives a second signal through a receive channel corresponding to the antenna 1.

There is no sequence difference between steps S901 and S902 and steps S903 and S904, and the steps S901 and S902 and the steps S903 and S904 may be performed simultaneously.

S905: The terminal may determine a delay difference and/or a phase difference between radio frequency channels of the terminal based on the sent first signal, the received first signal, the sent second signal, and the received second signal.

The delay difference and/or the phase difference between the radio frequency channels includes a delay difference and/or a phase difference between the receive channel corresponding to the antenna 1 and the receive channel corresponding to the antenna 2, and a delay difference and/or a phase difference between the transmit channel corresponding to the antenna 1 and the transmit channel corresponding to the antenna 2.

A process in which the terminal performs reciprocity self-calibration on the radio frequency channel may be implemented in a self-transmitting and receiving manner. The first signal sent by the transmit channel corresponding to the antenna 1 is received, through spatial transmission, by the receive channel corresponding to the antenna 2, to complete sounding of the transmit channel corresponding to the antenna 1 and the receive channel corresponding to the antenna 2. The following information B may be obtained based on the first signal sent by the terminal and the first signal received by the terminal. Refer to Formula 8: $B = \left({θ}_{r , 2}+2{πfτ}_{r , 2}\right) + \left({θ}_{t , 1}+2{πfτ}_{t , 1}\right)$

The second signal sent by the transmit channel corresponding to the antenna 2 is received, through spatial transmission, by the receive channel corresponding to the antenna 1, to complete sounding of the transmit channel corresponding to the antenna 2 and the receive channel corresponding to the antenna 1. The following information C may be obtained based on the second signal sent by the terminal and the second signal received by the terminal. Refer to Formula 9: $C = \left({θ}_{r , 1}+2{πfτ}_{r , 1}\right) + \left({θ}_{t , 2}+2{πfτ}_{t , 2}\right)$

According to the foregoing Formula 8 and Formula 9, the terminal may obtain a reciprocity calibration result A of the radio frequency channel, as shown in the following Formula 10: $A = B - C$

In some embodiments, the terminal does not support self-calibration, and the terminal cannot perform reciprocity calibration on the radio frequency channel. In this example, the terminal may exchange reference signals with the network device, to implement reciprocity calibration on the radio frequency channel by the terminal. Refer to FIG. 10. The process may include the following steps.

S1001: The terminal sends a second reference signal to the network device.

In embodiments of this application, the terminal may actively initiate a reciprocity calibration request to the network device. The terminal may send the second reference signal to the network device.

The second reference signal is an uplink reference signal. In some embodiments, for example, the uplink reference signal may be, for example, a sounding reference signal (sounding reference signal, SRS), a physical uplink control channel (physical uplink control channel, PUCCH)-demodulation reference signal (demodulation reference signal, DMRS) (PUCCH-DMRS), a physical uplink shared channel (physical uplink shared channel, PUSCH)-demodulation reference signal (PUSCH-DMRS), a phase noise tracking reference signal (phase noise tracking reference signal, PTRS), and an uplink positioning signal (uplink positioning RS). In some embodiments, for example, the uplink reference signal may be, for example, an NDP frame.

S1002: The network device sends second uplink CSI to the terminal, where the second uplink CSI is obtained based on the second reference signal.

After receiving the second reference signal, the network device may sound an uplink channel to obtain CSI of the uplink channel, and the CSI of the uplink channel may be referred to as the second uplink CSI. For a specific communication method, refer to related descriptions of obtaining second downlink CSI by a terminal based on a second reference signal, or refer to related provisions in an existing protocol.

S1003: The network device sends a third reference signal to the terminal.

S1004: The terminal sounds a downlink channel based on the third reference signal, to obtain second downlink CSI.

It should be understood that there is no sequence difference between step S1002 and steps S1003 and S1004, and the step S1002 and the steps S1003 and S1004 may be performed simultaneously.

For S1004, refer to related descriptions of obtaining second downlink CSI by a terminal based on a third reference signal, or refer to related provisions in an existing protocol.

S1005: The terminal obtains a delay difference and/or a phase difference between the radio frequency channels of the terminal based on the second downlink CSI and the second uplink CSI.

For example, the terminal includes two antennas. Each antenna corresponds to one radio frequency channel, and the radio frequency channel may include a receive channel and a transmit channel. The following uses a radio frequency channel corresponding to an antenna 1 of the terminal and a radio frequency channel corresponding to an antenna 2 of the terminal as an example to describe a reciprocity calibration process of the terminal on the radio frequency channel corresponding to the antenna 1 and the radio frequency channel corresponding to the antenna 2.

Step 1: Calculate a phase difference between radio frequency channels corresponding to antennas of the terminal, where the phase difference between the radio frequency channels corresponding to the antennas includes a phase difference between a transmit channel corresponding to the antenna 2 and a transmit channel corresponding to the antenna 1 and a phase difference between a receive channel corresponding to the antenna 2 and a receive channel corresponding to the antenna 1. The phase difference between the radio frequency channels corresponding to the antennas of the terminal may be represented as follows in Formula 11: $- \left(angle\left({h}_{11}^{UL}\right)-angle\left({h}_{11}^{DL}\right)\right) + \left(angle\left({h}_{12}^{UL}\right)-angle\left({h}_{21}^{DL}\right)\right)$

Herein, $angle \left({h}_{11}^{UL}\right)$ represents the transmit channel corresponding to the antenna 1 of the terminal, and represents phase information jointly formed by a propagation channel h₁₁ and the receive antenna 1 of the network device. $angle \left({h}_{11}^{DL}\right)$ represents the receive channel corresponding to the antenna 1 of the terminal, and represents a phase value jointly formed by the propagation channel h₁₁ and the transmit antenna 1 of the network device. $angle \left({h}_{12}^{UL}\right)$ represents the transmit channel corresponding to the antenna 2 of the terminal, and represents an initial phase value jointly formed by a propagation channel h₂₁ and the receive antenna 1 of the network device. $angle \left({h}_{21}^{DL}\right)$ represents the receive channel corresponding to the antenna 2 of the terminal, and represents an initial phase value jointly formed by the propagation channel h₂₁ and the transmit antenna 1 of the network device. $angle \left({h}_{11}^{UL}\right) - angle \left({h}_{12}^{UL}\right)$ represents the phase difference between the transmit channel corresponding to the antenna 2 of the terminal and the transmit channel corresponding to the antenna 1 of the terminal. $angle \left({h}_{11}^{DL}\right) - angle \left({h}_{21}^{DL}\right)$ represents the phase difference between the receive channel corresponding to the antenna 2 of the terminal and the receive channel corresponding to the antenna 1 of the terminal.

Because *hᵢⱼ(f)* has uplink and downlink reciprocity, Formula 11 may be simplified as Formula 12, as shown in the following: $\begin{matrix}A = \left(\left({ϕ}_{r , 1}+2πf{τ}_{sta}^{r , 1}\right)-\left({θ}_{r , 1}+2πf{τ}_{ap}^{r , 1}\right)+\left({θ}_{t , 1}+2πf{τ}_{ap}^{t , 1}\right)-\left({ϕ}_{t , 1}+2πf{τ}_{sta}^{t , 1}\right)\right) \\ - \left(\left({ϕ}_{r , 2}+2πf{τ}_{sta}^{r , 2}\right)-\left({θ}_{r , 1}+2πf{τ}_{ap}^{r , 1}\right)+\left({θ}_{t , 1}+2πf{τ}_{ap}^{t , 1}\right)-\left({ϕ}_{t , 2}+2πf{τ}_{sta}^{t , 2}\right)\right) \\ = \left(\left({ϕ}_{r , 1}+2πf{τ}_{sta}^{r , 1}\right)-\left({ϕ}_{t , 1}+2πf{τ}_{sta}^{t , 1}\right)\right) - \left(\left({ϕ}_{r , 2}+2πf{τ}_{sta}^{r , 2}\right)-\left({ϕ}_{t , 2}+2πf{τ}_{sta}^{t , 2}\right)\right) \\ = \left(\left({ϕ}_{r , 1}+2πf{τ}_{sta}^{r , 1}\right)-\left({ϕ}_{r , 2}+2πf{τ}_{sta}^{r , 2}\right)\right) - \left(\left({ϕ}_{t , 1}+2πf{τ}_{sta}^{t , 1}\right)-\left({ϕ}_{t , 2}+2πf{τ}_{sta}^{t , 2}\right)\right)\end{matrix}$

Reciprocity calibration on the radio frequency channel can be implemented when one end (for example, the terminal) has complete uplink and downlink CSI. For a broadband system, CSI feedback on all bands inevitably introduces information feedback overheads. It is considered that there is a linear relationship between a carrier f and a reciprocity calibration coefficient between a transmit channel and a receive channel. Therefore, reciprocity calibration coefficients on some carriers may be obtained through linear interpolation based on the other coefficients.

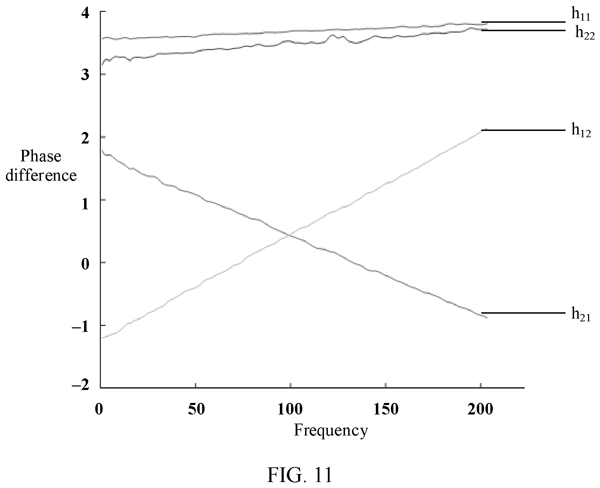

There is a linear relationship between a frequency and the phase difference between the radio frequency channels. A phase difference between radio frequency channels of a terminal and a frequency may be obtained through linear fitting, as shown in FIG. 11.

Refer to FIG. 11. A vertical coordinate (a y-axis) in FIG. 11 is a phase difference between an uplink radio frequency channel and a downlink radio frequency channel, where a phase difference between uplink and downlink radio frequency channels can be calculated for each pair of uplink and downlink subchannels. A horizontal coordinate (an x-axis) in FIG. 11 is a frequency of the subchannel. FIG. 11 shows phases of h₁₁, h₂₁, h₁₂, and h₂₂. It should be understood that FIG. 11 is described by using $angle \left({h}_{11}^{UL}\right) - angle \left({h}_{11}^{DL}\right)$ as an example.

It is considered that Formula 11 may be transformed into the following Formula 13: $\begin{matrix}- \left(angle\left({h}_{11}^{UL}\right)-angle\left({h}_{11}^{DL}\right)\right) + \left(angle\left({h}_{12}^{UL}\right)-angle\left({h}_{21}^{DL}\right)\right) \\ = - \left(angle\left({h}_{11}^{UL}\right)-angle\left({h}_{12}^{UL}\right)\right) + \left(angle\left({h}_{11}^{DL}\right)-angle\left({h}_{21}^{DL}\right)\right)\end{matrix}$

Therefore, to help a peer end perform reciprocity calibration on the radio frequency channel, the network device needs to feed back only the phase differences on some carriers in $- \left(angle\left({h}_{11}^{UL}\right)-angle\left({h}_{21}^{UL}\right)\right)$*.* The terminal may restore, based on the phase differences on the carriers, channel reciprocity calibration coefficients located on the carriers. The terminal may complete calculation of channel reciprocity calibration coefficients on all carriers through linear interpolation. An extracted feedback carrier space may be fed back at a granularity of Ng.

With reference to the foregoing Formula and FIG. 11, it may be determined that the phase difference between the radio frequency channels of the terminal may be represented by the following Formula 14, and the delay difference between the radio frequency channels of the terminal may be represented by the following Formula 15: $\left({θ}_{r , 2}-{θ}_{r , 1}\right) - \left({θ}_{t , 2}-{θ}_{t , 1}\right) = b 21 - b 11 = b 22 - b 12$ $\left({τ}_{r , 2}-{τ}_{r , 1}\right) - \left({τ}_{t , 2}-{τ}_{t , 1}\right) = k 21 - k 11 = k 22 - k 12$

Refer to FIG. 11. A slope of a linear fitting result between the frequency and a phase difference between radio frequency channels corresponding to h₁₁ is represented by k11, and an intersection point with the y-axis is *b*11. Similarly, a slope of a linear fitting result between the frequency and a phase difference between radio frequency channels corresponding to h₁₂ is represented by k12, and an intersection point with the y-axis is *b*12. A slope of a linear fitting result between the frequency and a phase difference between radio frequency channels corresponding to h₂₁ is represented by *k*21, and an intersection point with the y-axis is *b*21. A slope of a linear fitting result between the frequency and a phase difference between radio frequency channels corresponding to h₂₂ is represented by *k*22, and an intersection point with the y-axis is *b*22.

Therefore, with reference to FIG. 11, the terminal can implement reciprocity calibration on the radio frequency channel of the terminal, and can obtain the phase difference between the radio frequency channels of the terminal, as shown in Formula 14, and obtain the delay difference between the radio frequency channels of the terminal, as shown in Formula 15. Further, the terminal can perform reverse calculation on the first downlink CSI based on the phase difference and/or the delay difference, to obtain the first uplink CSI.

In embodiments of this application, the terminal supporting self-calibration can implement reciprocity calibration on the radio frequency channel. The terminal not supporting self-calibration can exchange the reference signals with the network device, and implement reciprocity calibration on the radio frequency channel with reference to the second uplink CSI and the second downlink CSI. After performing reciprocity calibration on the radio frequency channel, the terminal can perform steps in the communication method provided in the foregoing embodiment.

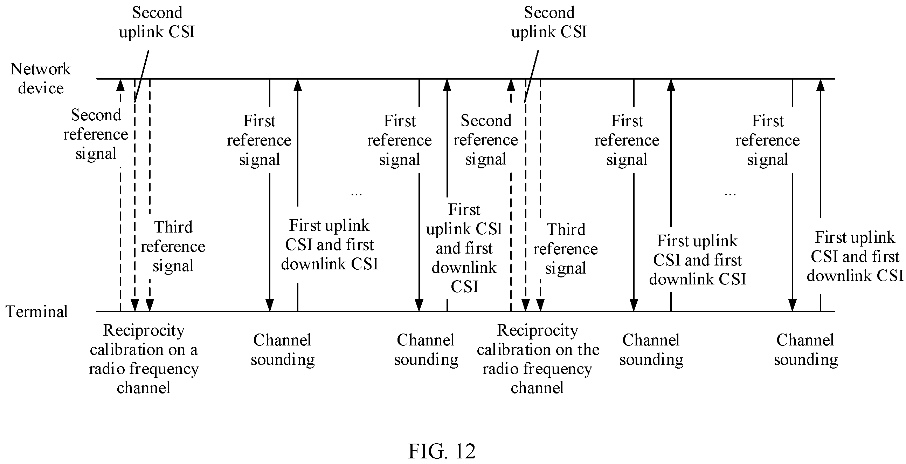

Refer to FIG. 12. In an example in which a terminal and a network device exchange reference signals to implement reciprocity calibration on a radio frequency channel, the terminal may periodically initiate a reciprocity calibration request to the network device, and the terminal and the network device exchange the reference signals, so that the terminal can implement reciprocity calibration on the radio frequency channel with reference to second uplink CSI and second downlink CSI. After the terminal performs reciprocity calibration on the radio frequency channel once, the terminal may perform downlink channel sounding for at least once, that is, the network device may periodically send a first reference signal to the terminal for at least once. The terminal may sound a downlink channel once in response to each first reference signal, to obtain one piece of first downlink CSI. In addition, for the first downlink CSI, the terminal may perform reverse calculation on the first downlink CSI based on this reciprocity calibration result of the radio frequency channel, to obtain first uplink CSI. For that the terminal obtains the first uplink CSI based on the first downlink CSI and the reciprocity calibration result of the radio frequency channel, refer to the description in S602.

The foregoing describes in detail the communication method provided in embodiments of this application with reference to the accompanying drawings. The following describes in detail apparatuses provided in embodiments of this application with reference to the accompanying drawings.

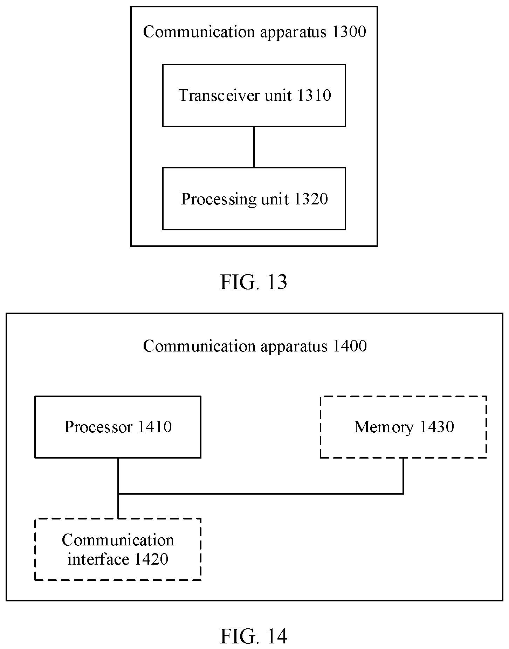

FIG. 13 to FIG. 16 are block diagrams of possible communication apparatuses according to embodiments of this application. These communication apparatuses may be configured to implement functions of the terminal or the network device in the foregoing method embodiments. Therefore, beneficial effect of the foregoing method embodiments can also be implemented. In embodiments of this application, the communication apparatus may be the terminal or the network device in the foregoing method embodiments, or may be a component (for example, a chip, a chip system, or a processor) configured in the terminal or the network device, or may be a logic module or software that can implement some or all functions of the terminal or the network device.

FIG. 13 shows a communication apparatus provided in this application. The communication apparatus 1300 includes a transceiver unit 1310 and a processing unit 1320.

In a possible design, the communication apparatus 1300 is configured to implement functions of the terminal in the method embodiments shown in FIG. 6, FIG. 9, and FIG. 10.

The transceiver unit 1310 is configured to: receive a first reference signal, and send first uplink channel state information, where the first uplink channel state information is obtained by performing radio frequency channel reciprocity compensation on first downlink channel state information, and the first downlink channel state information is obtained based on the first reference signal.

Optionally, the transceiver unit 1310 is further configured to send the first downlink channel state information, where the first downlink channel state information and the first uplink channel state information are carried in a same message.

Optionally, the processing unit 1320 is configured to perform radio frequency channel reciprocity compensation (or reverse calculation) on the first downlink channel state information based on a reciprocity calibration result of a radio frequency channel of the terminal, to obtain the first uplink channel state information.

Optionally, the transceiver unit 1310 is further configured to receive first information, where the first information indicates to report downlink channel state information and uplink channel state information.

Optionally, the transceiver unit 1310 is further configured to send second information, where the second information indicates that there is a capability of reporting the downlink channel state information and the uplink channel state information.

Optionally, there is an association relationship between the first uplink channel state information and difference information between radio frequency channels corresponding to the first reference signal, and the difference information includes a delay difference and/or a phase difference.

Optionally, the reciprocity calibration result of the radio frequency channel of the terminal includes the delay difference and/or the phase difference between the radio frequency channels corresponding to the first reference signal.

Optionally, the processing unit 1320 is configured to perform reciprocity calibration on the radio frequency channel, to obtain the delay difference and/or the phase difference.

Optionally, the transceiver unit 1310 is further configured to: send a second reference signal, and receive second uplink channel state information, where the second uplink channel state information is obtained based on the second reference signal.

The transceiver unit 1310 is further configured to receive a third reference signal. The processing unit 1320 is further configured to determine the delay difference and/or the phase difference based on the second uplink channel state information and second downlink channel state information, where the second downlink channel state information is obtained based on the third reference signal.

The transceiver unit 1310 may perform reciprocity calibration on the radio frequency channel corresponding to the first reference signal based on the second uplink channel state information and the second downlink channel state information, to determine the delay difference and/or the phase difference.

For more detailed descriptions of the transceiver unit 1310 and the processing unit 1320, directly refer to related descriptions in the foregoing method embodiments. Details are not described herein again.

In another possible design, the communication apparatus 1300 is configured to implement functions of the network device in the method embodiments shown in FIG. 6 and FIG. 10.

The transceiver unit 1310 is configured to: send a first reference signal, and receive first uplink channel state information, where the first uplink channel state information is obtained by performing radio frequency channel reciprocity compensation on first downlink channel state information, and the first downlink channel state information is obtained based on the first reference signal.

Optionally, the transceiver unit 1310 is further configured to receive the first downlink channel state information, where the first downlink channel state information and the first uplink channel state information are carried in a same message.

Optionally, the transceiver unit 1310 is further configured to send first information, where the first information indicates to report downlink channel state information and uplink channel state information.

Optionally, the transceiver unit 1310 is further configured to receive second information, where the second information indicates that there is a capability of reporting the downlink channel state information and the uplink channel state information.

Optionally, there is an association relationship between the first uplink channel state information and difference information between radio frequency channels corresponding to the first reference signal, and the difference information includes a delay difference and/or a phase difference.

Optionally, the transceiver unit 1310 is further configured to: receive a second reference signal, and send second uplink channel state information, where the second uplink channel state information is obtained based on the second reference signal. The processing unit 1320 is configured to sound an uplink channel based on the second reference signal, to obtain the second uplink channel state information.

The transceiver unit 1310 is further configured to send a third reference signal, where the third reference signal is used to determine second downlink channel state information, and the delay difference and/or the phase difference are/is obtained based on the second uplink channel state information and the second downlink channel state information. In other words, the second uplink channel state information and the second downlink channel state information are used by the terminal to perform reciprocity calibration on the radio frequency channel corresponding to the first reference signal, to obtain the delay difference and/or the phase difference between the radio frequency channels corresponding to the first reference signal.

For more detailed descriptions of the transceiver unit 1310 and the processing unit 1320, directly refer to related descriptions in the foregoing method embodiments. Details are not described herein again.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation on a terminal side or a network device side in the foregoing method. A component that is in the transceiver unit and that is configured to implement a receiving function may be considered as a receiving unit, and a component that is in the transceiver unit and that is configured to implement a sending function may be considered as a sending unit. In other words, the transceiver unit includes a receiving unit and a sending unit.

It should be further noted that in a possible design, the transceiver unit and/or the processing unit may be implemented via a virtual module. For example, the processing unit may be implemented via a software functional unit or a virtual apparatus, and the transceiver unit may be implemented via a software function or a virtual apparatus. In another possible design, the processing unit or the transceiver unit may be implemented via a physical apparatus. For example, if the apparatus is implemented via a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In embodiments of this application, division into the units is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

FIG. 14 shows another communication apparatus provided in this application. The communication apparatus 1400 includes a processor 1410. The processor 1410 may be configured to execute a computer program or instructions in a memory, to implement steps performed by the terminal or steps performed by the network device in the foregoing method embodiments.

Optionally, the apparatus 1400 further includes a communication interface 1420. The processor 1410 and the communication interface 1420 are coupled to each other. It may be understood that the communication interface 1420 may be a transceiver or an input/output interface.

Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method in the foregoing embodiment, the processor 1410 is configured to perform functions of the processing unit, and the communication interface 1420 is configured to perform a function of the receiving unit and/or the sending unit. Whether the communication interface 1420 is configured to perform sending or receiving may be specifically determined based on whether the communication interface is configured to perform a sending action or a receiving action in the solution performed by the communication apparatus 1400.

When the communication apparatus 1400 is a chip used in a terminal, the chip implements functions of the terminal in the foregoing method embodiment. The chip of the terminal receives a signal from another module (for example, a radio frequency module or an antenna) in the terminal, where the signal may be sent by a network device to the terminal; or the chip of the terminal sends a signal to another module (for example, a radio frequency module or an antenna) in the terminal, where the signal may be sent by the terminal to a network device.

When the communication apparatus 1400 is a chip used in a network device, the chip implements functions of the network device in the foregoing method embodiment. The chip of the network device receives a signal from another module (for example, a radio frequency module or an antenna) in the network device, where the signal may be sent by a terminal to the network device; or the chip of the network device sends a signal to another module (for example, a radio frequency module or an antenna) in the network device, where the signal may be sent by the network device to a terminal.

It may be understood that when the communication apparatus 1400 is a terminal or a network device, the communication interface 1420 may be a transceiver, and may specifically include a transmitter and a receiver. The transmitter is configured to send a signal, and the receiver is configured to receive a signal. When the communication apparatus 1400 is a chip used in a terminal or a network device, the communication interface 1420 may be an input/output circuit, a bus, a module, a pin, or another type of communication interface. An input circuit in the input/output circuit may be configured to perform receiving, and an output interface may be configured to perform sending.

It should be understood that in the communication apparatus 1400 shown in FIG. 14, the processor 1410 may correspond to the processing unit 1110 in the foregoing communication apparatus 1100, and the communication interface 1420 may correspond to the transceiver unit 1140 in the foregoing communication apparatus 1100.

It should be further understood that the coupling in embodiments of this application is an indirect coupling or a communication connection between apparatuses, units, or modules, may be in an electrical, mechanical, or another form, and is used for information exchange between the apparatuses, the units, or the modules. The processor 1410 may operate in collaboration with the memory 1430. A specific connection medium between the processor 1410, the communication interface 1420, and the memory 1430 is not limited in embodiments of this application.

Optionally, the processor 1410, the communication interface 1420, and the memory 1430 are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

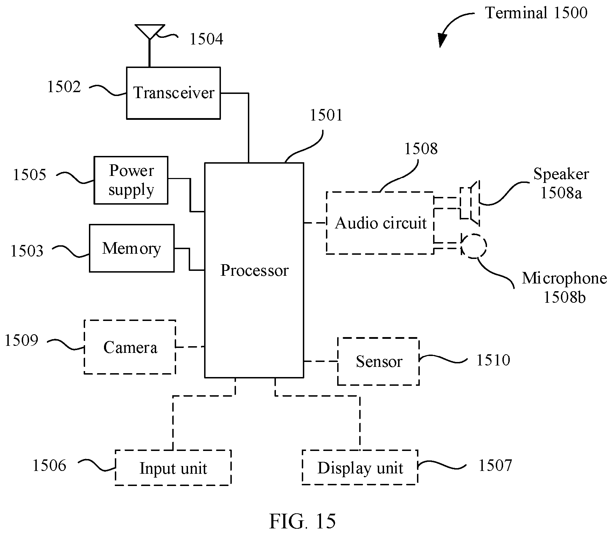

FIG. 15 is a diagram of a structure of a terminal according to an embodiment of this application. As shown in FIG. 15, the terminal 1500 may perform functions of the terminal in the foregoing method embodiments. As shown in the figure, the terminal 1500 includes a processor 1501 and a transceiver 1502. Optionally, the terminal 1500 further includes a memory 1503. The processor 1501, the transceiver 1502, and the memory 1503 may communicate with each other through an internal connection path, to transfer a control signal and/or a data signal. The memory 1503 is configured to store a computer program. The processor 1501 is configured to invoke the computer program from the memory 1503 and run the computer program, to control the transceiver 1502 to send or receive a signal. Optionally, the terminal 1500 may further include an antenna 1504, configured to send, through a radio signal, uplink data or uplink control signaling output by the transceiver 1502.

The processor 1501 and the memory 1503 may be combined into a processing apparatus, and the processor 1501 is configured to execute program code stored in the memory 1503 to implement the foregoing functions. During specific implementation, the memory 1503 may alternatively be integrated into the processor 1501, or may be independent of the processor 1501. The processor 1501 may correspond to the processing unit in FIG. 11 or the processor in FIG. 12.

The transceiver 1502 may correspond to the transceiver unit in FIG. 11 or the communication interface in FIG. 12, and may also be referred to as a transceiver unit. The transceiver 1502 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal 1500 shown in FIG. 15 can implement all processes related to the terminal in the foregoing method embodiments. Operations and/or functions of modules in the terminal 1500 are respectively used to implement corresponding procedures in the foregoing method embodiments. For details, refer to the descriptions in the foregoing method embodiments. To avoid repetition, detailed descriptions are properly omitted herein.

The processor 1501 may be configured to perform an action that is implemented inside the terminal and that is described in the foregoing method embodiments. The transceiver 1502 may be configured to perform a sending action by the terminal for the network device or a receiving operation from the network device in the foregoing method embodiments. For details, refer to the descriptions in the foregoing method embodiments. Details are not described herein again.

Optionally, the terminal 1500 may further include a power supply 1505, configured to provide power for various components or circuits in the terminal. In embodiments of this application, a rectifier may be connected between the power supply 1505 and the antenna 1504. After an electromagnetic wave signal is received by the antenna 1504 and converted into an alternating current signal, the alternating current signal may be further converted into a direct current signal via the rectifier, and then the direct current signal is output to the power supply 1505.

In addition, to improve functions of the terminal, the terminal 1500 may further include one or more of an input unit 1506, a display unit 1507, an audio circuit 1508, a camera 1509, a sensor 1510, and the like. The audio circuit may further include a speaker 1508a, a microphone 1508b, and the like.

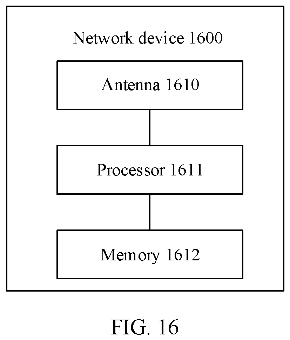

FIG. 16 is a diagram of a structure of a network device according to an embodiment of this application. The network device 1600 shown in FIG. 16 may perform functions of the network device in the foregoing method embodiments. As shown in the figure, the network device 1600 may include one or more of the following: one or more antennas 1610, at least one processor 1611, and at least one memory 1612.

The processor 1611 may be configured to perform steps performed by the network device in the foregoing method embodiments, to implement the communication method in embodiments of this application.

It should be understood that the network device 1600 shown in FIG. 16 can implement processes related to the network device in the foregoing method embodiments. Operations and/or functions of modules in the network device 1600 are respectively used to implement corresponding procedures in the foregoing method embodiments. For details, refer to the descriptions in the foregoing method embodiments. To avoid repetition, detailed descriptions are properly omitted herein.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The genera-purpose processor may be a microprocessor or any regular processor or the like.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a communication system. The communication system includes the foregoing network device and terminal.

This application further provides a computer program product. The computer program product includes a computer program (which may also be referred to as code or instructions). When the computer program is run, a computer is enabled to perform the method performed by the terminal or the method performed by the network device in the foregoing method embodiments.

This application further provides a computer-readable storage medium. The computer-readable storage medium stores a computer program (which may also be referred to as code or instructions). When the computer program is run, a computer is enabled to perform the method performed by the terminal or the method performed by the network device in the foregoing method embodiments.

Terms such as "unit" and "module" used in this specification may represent computer-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the function units may be implemented by using software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal, wherein the method comprises:
receiving a first reference signal; and
sending first uplink channel state information, wherein the first uplink channel state information is obtained by performing radio frequency channel reciprocity compensation on first downlink channel state information, and the first downlink channel state information is obtained based on the first reference signal.

2. The method according to claim 1, wherein the method further comprises:
sending the first downlink channel state information, wherein the first downlink channel state information and the first uplink channel state information are carried in a same message.

3. The method according to claim 1 or 2, wherein before receiving the first reference signal, the method further comprises:
receiving first information, wherein the first information indicates to report downlink channel state information and uplink channel state information.

4. The method according to any one of claims 1 to 3, wherein the method further comprises:
sending second information, wherein the second information indicates that there is a capability of reporting the downlink channel state information and the uplink channel state information.

5. The method according to any one of claims 1 to 4, wherein there is an association relationship between the first uplink channel state information and difference information between radio frequency channels corresponding to the first reference signal, and the difference information comprises a delay difference and/or a phase difference.

6. The method according to claim 5, wherein the method further comprises:
performing reciprocity calibration on the radio frequency channel, to obtain the delay difference and/or the phase difference.

7. The method according to claim 5, wherein the method further comprises:
sending a second reference signal;
receiving second uplink channel state information, wherein the second uplink channel state information is obtained based on the second reference signal;
receiving a third reference signal; and
determining the delay difference and/or the phase difference based on the second uplink channel state information and second downlink channel state information, wherein the second downlink channel state information is obtained based on the third reference signal.

8. A communication method, applied to a network device, wherein the method comprises:
sending a first reference signal; and
receiving first uplink channel state information, wherein the first uplink channel state information is obtained by performing radio frequency channel reciprocity compensation on first downlink channel state information, and the first downlink channel state information is obtained based on the first reference signal.

9. The method according to claim 8, wherein the method further comprises:
receiving the first downlink channel state information, wherein the first downlink channel state information and the first uplink channel state information are carried in a same message.

10. The method according to claim 8 or 9, wherein before sending the first reference signal, the method further comprises:
sending first information, wherein the first information indicates to report downlink channel state information and uplink channel state information.

11. The method according to any one of claims 8 to 10, wherein the method further comprises:
receiving second information, wherein the second information indicates that there is a capability of reporting the downlink channel state information and the uplink channel state information.

12. The method according to any one of claims 8 to 11, wherein there is an association relationship between the first uplink channel state information and difference information between radio frequency channels corresponding to the first reference signal, and the difference information comprises a delay difference and/or a phase difference.

13. The method according to claim 12, wherein the method further comprises:
receiving a second reference signal;
sending second uplink channel state information, wherein the second uplink channel state information is obtained based on the second reference signal; and
sending a third reference signal, wherein the third reference signal is used to determine second downlink channel state information, and the delay difference and/or the phase difference are/is obtained based on the second uplink channel state information and the second downlink channel state information.

14. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 7 or the method according to any one of claims 8 to 13 through a logic circuit or by executing code instructions.

15. A communication system, comprising a communication apparatus configured to implement the method according to any one of claims 1 to 7, and a communication apparatus configured to implement the method according to any one of claims 8 to 13.

16. A computer-readable storage medium, wherein the computer-readable storage medium stores a computer program, and when the computer program is executed by a processor, the method according to any one of claims 1 to 7 is performed, or the method according to any one of claims 8 to 13 is performed.
